# EUROPÄISCHE PATENTSCHRIFT

(11) **EP 1 869 331 B1**
(45) Veröffentlichungstag und Bekanntmachung des Hinweises auf die Patenterteilung: **24.02.2010**
(21) Anmeldenummer: 06742262.6
(22) Anmeldetag: 12.04.2006
(51) Int. Cl.: F16B 5/10, F16B 21/02, A47B 47/04, F16B 12/12, A47C 1/124, F16B 12/20, F16B 12/40

(54) **KOPPLUNGSSYSTEM ZUM RASCHEN LÖSBAREN VERBINDEN VON MÖBELTEILEN, MIT GERINGEM PLATZBEDARF BEI LAGERUNG UND SITZMÖBELSTÜCKE**
COUPLING SYSTEM FOR RAPIDLY AND DETACHABLY INTERCONNECTING FURNITURE ELEMENTS REQUIRING LITTLE STORAGE SPACE, AND CORRESPONDING SEATS
SYSTEME D'ACCOUPLEMENT POUR ASSEMBLAGE AMOVIBLE RAPIDE DE PARTIES DE MEUBLES, A FAIBLE ENCOMBREMENT AU STOCKAGE, ET SIEGES

(30) Priorität: 13.04.2005 DE 102005016998
(43) Veröffentlichungstag der Anmeldung: 26.12.2007
(73) Patentinhaber: Wilhelm Hardeweg GmbH & Co. Kg, 46342 Velen (DE)
(72) Erfinder: HARDEWEG, Wilhelm, 46342 Velen (DE)
(74) Vertreter: Gehrke, Peter P.
(86) Internationale Anmeldenummer: PCT/DE2006/000719
(87) Internationale Veröffentlichungsnummer: WO 2006/108415

(56) Entgegenhaltungen:
- DE-A1- 10 327 775
- DE-U1- 29 610 533
- GB-A- 2 323 652
- US-A- 4 657 462

## Beschreibung

Die Erfindung betrifft ein Kopplungssystem zum lösbaren Verbinden von Möbelteilen mit zwei Verbindungselementen und Möbel, insbesondere Sitzmöbelstücke, deren Möbelteile, wie Stützen, Träger usw., mit Hilfe des Kopplungssystems lösbar gekoppelt sind.

Im Stand der Technik sind Möbel bekannt, deren Teile einander mit Hilfe von Scharnieren, Beschlägen, Bolzenverbindungen, Zapfenbändem usw. gekoppelt sind. Es zeigt sich jedoch, dass Möbel beispielsweise auf Messebauten oder bei sonstigen Veranstaltungen, wie Kongressen, Sportveranstaltungen, usw., bei deren Gelegenheit rasch beispielsweise Sitzmöbel bereitgestellt werden sollen, nicht nur diese Sitzmöbel rasch zusammengebaut, sondern auch deren Lagerung raumsparend erfolgen sollen.

So ist im Stand der Technik ein herkömmliches Verbindungssystem zum wieder lösbaren Verbinden von Möbelteilen mit zwei Verbindungselementen bekannt, wobei die Verbindungselemente verformbar und / oder relativ zueinander verlagerbar ausgebildet sind, so dass zumindest eine wieder lösbare kraftschlüssige Verbindung zwischen den Möbelteilen und / oder mindestens einem Möbelteil herstellbar ist. Das eine Verbindungselement besteht im wesentlichen aus einem Halteabschnitt, welcher mit einer Ausnehmung in Eingriff gebracht werden kann. Dieser Halteabschnitt ist in der Draufsicht im wesentlichen T-förmig ausgebildet.

Zudem erweist sich der Transport des herkömmlichen Verbindungssystems als kostenintensiv, da diese sehr viel Platz im gelagerten Zustand einnehmen. Auch die Lagerung des herkömmlichen Verbindungssystems macht nicht nur viel Lagerfläche erforderlich sondern verursacht auch hohe Lagerungskosten, weil das herkömmliche Verbindungssystem vorsichtig zu verpacken und beiseite zu legen ist.

Das andere Verbindungselement besteht aus einer Ausnehmung. Die Ausnehmung umfasst einen Einführbereich und einen Haltebereich. Der Einführbereich ist zu einer Seite offen. Das herkömmliche Verbindungssystem ist dadurch gekennzeichnet, dass der Halteabschnitt des einen Verbindungselementes seitlich durch die Öffnung des Einführbereichs in den Einführbereich eingeführt und anschließend in den an den Einführbereich sich anschließenden Haltebereich weiterbewegt wird. Sobald der Halteabschnitt in dem Haltebereich sich befindet, wird der Halteabschnitt des einen Verbindungselementes geschwenkt und gelangt derart mit den den Haltebereich seitlich begrenzenden Randbereichen in Eingriff.

Dieses herkömmliche Verbindungssystem zeigt mangelnde Formstabilität, weil die Ausnehmung zumindest an einer Seite durch den seitlich angeordneten Einführbereich offen ist und gerade dann, wenn die Möbelteile aus Holz bestehen, eine Verformbarkeit im Bereich des Einführbereichs der Ausnehmung aufzutreten vermag.

Aber nicht nur die mangelnde Formstabilität zeichnet das herkömmliche Verbindungssystem aus, sondern hinzukommend ist das herkömmliche Verbindungssystem von mangelnder Statik des anderen Verbindungselementes geprägt, weil eine Abstützung durch übereinander angeordnete Ausnehmungen bei hoher Krafteinwirkung auf die beiden Stützelemente, welche seitlich angeordnet sind, beispielsweise bei einem Sitzmöbelstück, beeinträchtigen wird und die Gefahr der Verkantung besteht.

Auch erweist sich das herkömmliche Kopplungssystem von Nachteil, weil bedingt durch die zumindest nach einer Seite offene Ausnehmung die Belastbarkeit der Verbindungselemente, welchc die Ausnehmungen aufweisen, eingeschränkt ist.

So wird in US 4,657,462 A ein Kopplungssystem offenbart, welches zwar handhabbar und rasch installierbar ist, jedoch lediglich der Verlängerung von Paneelbrettern unterschiedlicher Dicke entlang einer Geraden dient. Das herkömmliche Kopplungssystem umfasst ein Drehteil mit einem vorderen Bereich viertelkreisförmig ausgebildeten T-Kopfstück, eine Kappe mit einer Öffnung, eine Feder und die beiden zu verbindenden Paneelbretter, welche Öffnungen unterschiedlicher Ausgestaltung zur Aufnahme eines T-Kopfstücks des Drehteils aufzuweisen haben. Das herkömmliche Kopplungssystems weist den Nachteil auf, dass zur Kopplung die Paneelelemente einander flächenparallel angeordnet werden, anschließend die Öffnungen der beiden Paneelbretter dergestalt zueinander auszurichten sind, dass das Kopfstück erst nach deren Ausrichtung formgerecht in beide Öffnungen ohne Verkantung einzuführen ist.

Das in DE 296 10 533 U1 beschriebene Verbindungssystem zeichnet sich nicht durch eine hinreichende Formstabilität aus, weil das erste plattenförmige Verbindungsteil einen Haltebereich hat, welcher von einer Seite des ersten Verbindungsteils als Einführbereich über eine Ausnehmung von außen zugänglich ist. Über den Einführbereich wird ein Kopfstück des zweiten plattenförmigen Verbindungselements eingeführt und in dem Haltebereich des ersten Verbindungsteils verschwenkt. Der Einführbereich des Halteabschnitts des ersten Verbindungsteils ist im verschwenkten Zustand von mangelnder Formstabilität, denn die den Haltebereich begrenzenden Plattenbereiche sind nicht miteinander verbunden, so dass diese Plattenbereiche im verschwenktem Zustand des Verbindungssystems bei Belastung zueinander beweglich sind und die Gefahr der Lockerung der einander verbundenen Verbindungsteile besteht.

Die in DE 103 27 775 A1 offenbarte Möbelverbindung ermöglicht bei der Herstellung der Möbelverbindung einen geringern Verschnitt und eine kostengünstige Herstellung. Die herkömmliche Möbelverbindung besteht aus einem flächigen Element und einem länglichen Element. Das flächige Element weist seitlich versetzt eine L-förmige Öffnung mit seitlichen weiteren Verzweigungen und einem seitlich zugänglichen Einführbereich auf, welche von einer Seite des flächigen Elements zugänglich ist und des Einschiebens Aufnahme des T-förmigen länglichen Elementes dient.

Es zeigt sich aber, dass wegen der seitlich versetzt ausgefrästen, und nicht allseits begrenzten Öffnung die den Einführbereich umgebenden gegenüberliegenden Nasen bei Belastung nachgeben und beweglich sind, so dass die Gefahr der Lockerung der einander verbundenen Verbindungsteile besteht.

Das in GB 2 323 652 A beschriebene Verbindungssystem koppelt zwei Paneelbretter. Das eine Paneelbrett umfasst einen mittig angeordneten Durchbruch und zwei dem Durchbruch gegenüberliegende seitliche Aussparungen. Die gegenüberliegenden Aussparungen sind mit dem Durchbruch längs einer Geraden angeordnet. Das andere Paneelbrett ist an einem freien Ende T-förmig ausgestaltet. Zusätzlich sind zwei seitlich angeordneten Zapfen an dem anderen Paneelbrett angeformt. Bei der Kopplung des einen Paneelbretts mit dem anderen wird das andere Paneelbrett mit seinem T-Stück durch den Durchbruch hindurchgeführt. Zusätzlich werden die seitlichen Zapfen des anderen Paneelbretts in die Aussparungen des einen Paneelbretts aufgenommen. Das T-förmige Kopfteil ragt über die Oberfläche des einen Paneelbretts soweit hinaus, dass der Bereich zwischen dem T-förmigen Kopfstück und dem hinterschnittenen Abschnitt von einer Drehscheibe zwecks Verkeilung untergriffen wird, um einen Festsitz der Paneelbretter zu ermöglichen.

Es zeigt sich aber wiederum, dass bei Belastung des herkömmlichen Verbindungssystems die Drehscheibe sich lockert, weil deren Sitz nicht gesichert ist, so dass das eine Paneelbrett aus dem anderen herausgleitet.

Aufgabe der Erfindung soll es sein, ein Kopplungssystem bereitzustellen, welches eine hinreichende Formstabilität gewährleistet auch bei hoher Belastung und eine lediglich geringfügige Verformbarkeit ermöglicht, wenn überhaupt, auch bei schwergewichtigen Personen, beispielsweise bei Verwendung des bereitzustellenden Kopplungssystems in Sitzmöbeln.

Hinzukommend soll das bereitzustellende Kopplungssystem einen dauerhaften Formschluss zwischen den beiden zu verbindenden Verbindungselementen ermöglichen, ohne dass die Lösbarkeit bei Abbau der Möbel eingeschränkt wird und Werkzeuge oder sonstige Hilfsmittel verwendet werden.

Zudem soll das bereitzustellende Kopplungssystem einen dauerhaften Formschluss zwischen den beiden zu verbindenden Verbindungselementen bei Belastung ermöglichen, so dass nicht die Gefahr der Lockerung der einander verbundenen Verbindungsteile besteht.

Ebenfalls sollen die Möbel rasch und einfach entkoppelbar bzw. auseinander baubar und kostengünstig transportierbar sein.

Ebenso sollen Möbelteile der auseinander genommenen Möbel wenig Platz bei deren Lagerung einnehmen und eine gewisse Robustheit bei Lagerung aufweisen.

Hinzutretend sollen die Möbelteile, welche die Verbindungselemente aufweisen, wenig Platz bei Lagerung einnehmen, bei Lagerung geringe Möglichkeit der Beschädigung bieten und rasch den Zusammenbau der Möbelstücke aus Möbelteilen ermöglichen.

Hinzutretend soll sich das bereit zu stellende Sitzmöbelstück durch eine Stand- und Sitzsicherheit und die Dauerhaftigkeit und Belastbarkeit seiner verbundenen Möbelteile auszeichnen sowie
der Zusammenbau des Sitzmöbelstückes und dessen Abbau
einen wenig zeitaufwendigen Aufbau
ohne die Zuhilfenahme von Werkzeugen und sonstiger Hilfsmittel
sowie
nur geringe Anforderungen an die Geschicklichkeit des Benutzers,
und
lediglich einen geringen Platzbedarf der Möbelteile der Sitzmöbelstücke bei Lagerung ermöglichen.

Die Aufgabe wird gelöst durch den Hauptanspruch und dem Nebenanspruch. Die Unteransprüche betreffen bevorzugte Ausgestaltungen und Weiterentwicklungen der Erfindung.

Die Erfindung betrifft ein Kopplungssystem zum wieder lösbaren Verbinden von Möbelteilen, wobei das Kopplungssystem zwei plattenförmige Verbindungselemente aufweist, wobei
a. die Verbindungselemente relativ zueinander verlagerbar ausgebildet sind und zumindest eine wieder lösbare Verbindung zwischen den Möbelteilen herstellbar ist, das andere Verbindungselement einen Durchbruch aufweist, mit dem ein erstes Möbelteil ausgestattet werden kann, und das eine Verbindungselement ein mit dem Durchbruch in Eingriff bringbarer, an einem zweiten Möbelteil anordenbarer Halteabschnitt ist,
b. der Halteabschnitt des einen Verbindungselements einen Grundabschnitt, einen an den Grundabschnitt sich anschließenden Abschnitt und einen an den Abschnitt sich anschließenden stegartigen Verbindungsabschnitt hat, der an dem freien Ende des Halteabschnitts in einen hinterschnittenen Kopfabschnitt übergeht,
c. der Kopfabschnitt mindestens einen hinterschnittenen Bereich hat, welcher mit einem zu dem hinterschnittenen Bereich beabstandeten Randbereich des Abschnitts Eingriffsbereiche für das andere Verbindungselement bildet, an dem Halteabschnitt mindestens zwei entgegen gesetzt geöffnete Eingriffsbereiche ausgebildet sind,
d. die Eingriffsbereiche zu dem Verbindungsabschnitt hin von einem Grundrand begrenzt sind,
   welches dadurch gekennzeichnet ist, dass
e. der Abschnitt sich in Richtung freien Endes des Halteabschnitts in der Draufsicht verjüngt,
f. ein Übergangsbereich von dem Grundrand in den Randbereich des Abschnitts unter Bildung einer Einstülpnut eingezogen ist
   und
g. die Einstülpnut quer zu einer Mitte-Längsachse M des einen Verbindungselements ausgerichtet ist,
h. der Durchbruch (9) in der Draufsicht allseitig begrenzt ist, einen Durchführbereich zum Hindurchführen des Halteabschnitts des einen Verbindungselements mit seinem Kopfabschnitt längs der Mitte-Längsachse A des Durchführbereichs und einen Haltebereich zur Aufnahme des Halteabschnitts des einen Verbindungselements im verschwenkten Zustand umfasst,
i. der Durchführbereich in der Draufsicht rechteckig ist und mittig in den hohlzylinderförmig, erweiterten Haltebereich übergeht, in welchen Einstülpungen hineinragen, die gegenüber liegend und beabstandet voneinander angeordnet sind,
j. wobei der Halteabschnitt in dem verschwenkten Zustand mit seinem Verbindungsabschnitt an die Einstülpungen anschlägt.

Die Erfindung bezieht sich auch auf Möbel, welche als Möbelteile Stützen, Träger und oder sonstigen Teile, insbesondere Rücklehnen, umfassen, wobei die Stützen, die Träger und oder die sonstigen Teile der Möbel durch das o.g. Kopplungssystem einander lösbar verbunden sind.

Bei einer besonderen Ausgestaltung der erfindungsgemäßen Möbel sind die Stützen und die Träger der Möbel durch das Kopplungssystem lösbar verbunden und die Stützen und /oder Träger mit den Verbindungselementen ausgebildet, wobei
die Verbindungselemente relativ zueinander verlagerbar ausgebildet sind und zumindest eine wieder lösbare Verbindung zwischen den Möbelteilen herstellbar ist, das andere Verbindungselement ein Durchbruch in einem ersten Möbelteil ist und das eine Verbindungselement ein mit dem Durchbruch in Eingriff bringbaren, an einem zweiten Möbelteil angeordneter Halteabschnitt ist,
der Halteabschnitt des einen Verbindungselements einen Grundabschnitt, einen an den Grundabschnitt sich anschließenden Abschnitt und einen an den Abschnitt sich anschließenden stegartigen Verbindungsabschnitt hat, der an dem freien Ende des Halteabschnitts in einen hinterschnittenen Kopfabschnitt übergeht,
der Kopfabschnitt mindestens einen hinterschnittenen Bereich hat, welcher mit einem zu dem Bereich beabstandeten Randbereich des Abschnitts einen Eingriffsbereich für das andere Verbindungsteil bildet, an dem Halteabschnitt mindestens zwei entgegen gesetzt geöffnete Eingriffsbereiche ausgebildet sind,
die Eingriffsbereiche zu dem Verbindungsabschnitt hin von einem Grundrand begrenzt sind,
welche dadurch gekennzeichnet sind, dass
der Abschnitt sich in Richtung freien Endes des Halteabschnitts in der Draufsicht verjüngt,
ein Übergangsbereich von dem Grundrand in den Randbereich des Abschnitts unter Bildung einer Einstülpnut eingezogen ist
und
die Einstülpnut quer zu einer Mitte-Längsachse M des einen Verbindungselements (7a) ausgerichtet ist,
der Durchbruch des anderen Verbindungselementes einen in der Draufsicht rechteckig ausgebildeten Durchführbereich hat, der mittig in einen hohlzylinderförmig erweiterten Haltebereich übergeht, der Haltebereich zwei symmetrisch zu seiner Zylinderachse A angeordnete Einstülpungen hat, die Einstülpungen voneinander beabstandet sind und in einen hohlzylinderförmigen Innenraum des Haltebereichs hineinragend angeordnet sind,
der Halteabschnitt des einen Verbindungselements durch den Durchführbereich dergestalt hindurchgeführt ist, dass der hindurchgeführte Halteabschnitt bezüglich seiner Mitte-Längsachse M zumindest um einen vorbestimmten Winkel, insbesondere um 90°, aus dem durchgeführten Zustand in einen verschwenkten Zustand verschwenkbar ist, der Halteabschnitt in dem verschwenkten Zustand mit seinem Verbindungsabschnitt an die Einstülpungen anschlägt und nicht aus dem Haltebereich längs der Zylinderachse A des Haltebereichs rückführbar ist
sowie
der in den Haltebereich bis zum Anschlag verschwenkte Verbindungsabschnitt durch die Einstülpungen im verschwenkten Zustand nur in einer Drehrichtung begrenzt schwenkbar ist.

Ein weiterer Gegenstand der Erfindung ist auf ein Sitzmöbelstück, oder auch Sitzmöbel genannt, mit Stützen und Trägern gerichtet, welches dadurch gekennzeichnet ist, dass die Stützen und Träger als Möbelteile durch das erfindungsgemäße Kopplungssystem lösbar verbunden sind, wobei an den Trägern als zweites Möbelteil die einen Verbindungselemente mit den Halteabschnitten angeformt
und
die Stützen als erstes Möbelteil die Durchbrüche der anderen Verbindungselemente aufweisen, in welche die Halteabschnitte zur Bereitstellung der jeweiligen Verbindungen aufnehmbar sein können.
Eine besondere Ausgestaltung eines Sitzmöbelstücks mit Stützen und Trägern kann durch das erfindungsgemäße Kopplungssystem lösbar verbunden sein, welches hergestellt wird durch
a) durch Einführen der Halteabschnitte der Rückenplatte in die Durchführbereiche der Durchbrüche der Stützen als Seitenteile,
b) Überführen der Halteabschnitte in den geschwenkten Zustand durch Hochklappen der Rückenplatte bis zum Anschlag der Verbindungsabschnitte der Halteabschnitte an die Einstülpungen oder an die Randbereiche der Einstülpungen,
c) Einführen der Halteabschnitte der Sitzplatte in die Durchführbereiche der Durchbrüche der Stützen als Seitenteile und
d) Überführen der Halteabschnitte der Sitzplatte in den geschwenkten Zustand durch Niederschwenken der Sitzplatte mit Einführen des Zungenabschnitts in die Ausnehmung der Rückplatte bis zum Anschlag der Verbindungsabschnitte der Halteabschnitte an die Einstülpungen oder an die Randbereiche der Einstülpungen.
Auch kann das Sitzmöbelstück mit Stützen und Trägern durch das erfindungsgemäße Kopplungssystem lösbar verbunden sein und hergestellt werden
a. durch Einführen der Halteabschnitte der Rückenplatte in die Durchführbereiche der Durchbrüche der Stützen als Seitenteile,
b. nach geringfügigem Hochklappen derselben Einführen der Halteabschnitte der Sitzplatte in die Durchführbereiche der Durchbrüche der Stützen als Seitenteile,
c. Überführen der Halteabschnitte der Rückenplatte in den geschwenkten Zustand durch Hochklappen der Rückenplatte bis zum Anschlag der Verbindungsabschnitte der Halteabschnitte an die Einstülpungen oder an die Randbereiche der Einstülpungen und
d. Überführen der Halteabschnitte der Sitzplatte in den geschwenkten Zustand durch Niederschwenken der Sitzplatte mit Einführen des Zungenabschnitts in die Ausnehmung der Rückplatte bis zum Anschlag der Verbindungsabschnitte der Halteabschnitte an die Einstülpungen oder an die Randbereiche der Einstülpungen.
Das erfindungsgemäße Kopplungssystem, auch Kopplungseinrichtung genannt, umfasst zwei Verbindungselemente, welche vorzugsweise verformbar ausgebildet sind. Das erfindungsgemäße Kopplungssystem kann auch mehr als zwei Verbindungselemente umfassen.

Das erfindungsgemäße Kopplungssystem zum wieder lösbaren Verbinden von Möbelteilen kann zwei plattenförmigen Verbindungselementen auch umfassen, wobei die Verbindungselemente relativ zueinander verlagerbar ausgebildet sind und zumindest eine wieder lösbare, vorzugsweise kraft-, form- und / oder reibschlüssige, Verbindung zwischen den Möbelteilen herstellbar ist, das andere Verbindungselement ein Durchbruch in einem ersten Möbelteil ist und das eine Verbindungselement ein mit dem Durchbruch in Eingriff bringbaren, an einem zweiten Möbelteil angeordneter Halteabschnitt ist, wobei der Halteabschnitt des einen Verbindungselements einen Grundabschnitt, ein an den Grundabschnitt sich anschließenden Abschnitt und einen an den Abschnitt sich anschließenden stegartigen Verbindungsabschnitt hat, der an dem freien Ende des Halteabschnitts in einen hinterschnittenen Kopfabschnitt übergeht,
der Kopfabschnitt mindestens einen hinterschnittenen Bereich hat, welcher mit einem zu dem Bereich beabstandeten Randbereich des Abschnitts einen Eingriffsbereich für das andere Verbindungsteil bildet, an dem Halteabschnitt mindestens zwei entgegen gesetzt geöffnete Eingriffsbereiche ausgebildet sind,
der Abschnitt sich in Richtung freien Endes des Halteabschnitts in der Draufsicht sich verjüngt,
die Eingriffsbereiche zu dem Verbindungsabschnitt hin von einem Grundrand begrenzt sind,
vorzugsweise ein Übergangsbereich von dem Grundrand in den Randbereich des Abschnitts unter Bildung einer Einstülpnut eingezogen ist, wobei die Einstülpnut quer zu einer Mitte-Längsachse M des einen Verbindungselements ausgerichtet ist.

Die erfindungsgemäßen Möbel können Stützen, Träger und / oder sonstigen Teile, wie Rücklehnen, umfassen, wobei die Stützen, die Träger und / oder die sonstige Teile der Möbel durch das ö.g. Kopplungssysteme einander lösbar verbunden sind.

Das eine Verbindungselement weist einen Halteabschnitt auf. Das eine Verbindungselement umfasst einen Grundabschnitt, welcher in einen Abschnitt übergeht. Ebenso kann der Abschnitt Teil des Grundabschnitts sein. Der Abschnitt erstreckt sich in einen stegförmigen Verbindungsabschnitt. Vorzugsweise ist der Verbindungsabschnitt im Querschnitt rechteckig. Vorzugsweise verjüngt sich der Abschnitt in Richtung zu dem Verbindungsabschnitt hin. Der Verbindungsabschnitt geht in einen Kopfabschnitt über. Der Grundabschnitt kann auch ohne Abschnitt in den stegförmigen Verbindungsabschnitt übergehen.

Die Breite B1 des Kopfabschnitts ist größer als die Breite B2 des Verbindungsabschnitts. Die Breite B3 des Abschnitts ist vorzugsweise größer als die Breite B1 des Kopfabschnitts und / oder die B2 des Verbindungsabschnitts. Die Breite B3 des Abschnitts kann auch der Breite B4 des Grundabschnitts des einen Verbindungselements entsprechen.

Im Sinne der Erfindung wird unter Breite B1 auch verstanden, der Abstand der beiden gegenüber liegenden Seiten des Kopfabschnitts, die senkrecht zu den dem Kopfabschnitt zugewandten Seiten des Abschnitts ausgerichtet sind.

Im Sinne der Erfindung wird unter Breite B2 auch verstanden, der Abstand der beiden gegenüber liegenden Seiten des Verbindungsabschnitts, die senkrecht zu den dem Kopfabschnitt zugewandten Seiten des Abschnitts ausgerichtet sind.

Im Sinne der Erfindung wird unter Breite B3 auch verstanden, der Abstand der beiden gegenüber liegenden Seiten des Abschnitts in seinem dem Kopfabschnitt zugewandeten oberen Bereich, die in Richtung Kopfabschnitt hin sich erstrecken.

Im Sinne der Erfindung wird unter Breite B4 auch verstanden, der Abstand der beiden gegenüber liegenden Seiten des Grundabschnitts, die unterhalb des Kopfabschnitts sich befinden.

Der Kopfabschnitt bildet mit dem Verbindungsabschnitt und dem Abschnitt zwei Eingriffsbereiche, die gegenüber liegend angeordnet sind. Jeder Eingriffsbereich wird begrenzt von dem Randbereich des Abschnitts oder des Grundabschnitts und von dem Bereich des Kopfabschnitts, welcher dem Randbereich des Abschnitts bzw. des Grundabschnitts gegenüber liegt. Der Bereich und der Randbereich, bzw. in Plattenebene, sind vorzugsweise parallel einander ausgerichtet. Der Randbereich und der Bereich begrenzen einen Grundrand. Der Grundrand ist der dem Eingriffsbereich zugewandte Rand des Verbindungsabschnitts oder Nutgrund genannt.

Vorzugsweise geht der Grundrand unter Ausbildung von einer Einstülpung in den Abschnitt bzw. Grundabschnitt über. In der Draufsicht ist der Kopfabschnitt mit dem Verbindungsabschnitt T-förmig ausgebildet. Der Eingriffsbereich ist bevorzugterweise schlitzförmig. Vorzugsweise ist das eine Verbindungselement plattenförmig und / oder einstückig.

Das andere Verbindungselement umfasst einen Durchbruch. Der Durchbruch hat einen Durchführbereich und einen Haltebereich. Der Durchführbereich ist in der Draufsicht im Wesentlichen rechteckig ausgebildet, wobei dieser in den bogenförmigen Haltebereich übergeht. Der Durchführbereich weist gegenüber liegende Seitenwandungen auf, die den Durchführbereich zumindest teilweise begrenzen können. Vorzugsweise ist das andere Verbindungselement plattenförmig und / oder einstückig. Weiterhin hat der Durchführbereich Seitenwände, die gegenüber liegend angeordnet sind.

Unter Durchbruch wird im Sinne der Erfindung auch verstanden, eine Öffnung in dem anderen Verbindungselement, welche nicht seitlich zugänglich ist. Der Durchbruch umfasst den Durchführbereich und den Haltebereich, wobei der Durchführbereich mittig in den in Draufsicht kreisförmigen Haltebereich oder in einen Haltebereich mit zwei annähernd halbkreisförmigen Innenräumen übergeht. Der von dem Durchführbereich und dem Haltebereich ausgestaltete Innenraum des Durchbruchs kann in der Draufsicht von den Randbereichen, den Randbögen und den Seitenwänden begrenzt werden. Der Innenraum des Haltebereichs ist zylinderförmig mit einer Zylinderachse A.

In dem Haltebereich sind zwei Einstülpungen angeordnet, die zu der Zylinderachse A des Haltebereichs symmetrisch einander ausgerichtet sein können. Die Einstülpungen ragen in den hohlzylinderförmigen Haltebereich hinein. Die Einstülpungen sind voneinander beabstandet. Die Einstülpungen sind in Draufsicht vorzugsweise von übereinstimmender Größe und / oder Gestalt. Der Innenraum des Haltebereichs umfasst zwei Teilbereiche, die jeweils den Randbögen zugeordnet werden können. Die beiden Teilbereiche können durch eine ebene Drehung, vorzugsweise von 180°, um die Zylinderachse A des Haltebereichs zur Deckung gebracht werden.

Vorzugsweise hat die erste Einstülpung einen ersten Randbereich, welcher sich als eine Seitenwandung des Durchführbereichs fortsetzen kann. Dem ersten Randbereich kann ein zweiter Randbereich gegenüber liegen, welcher sich als eine Seitenwandung des Durchführbereichs fortsetzen kann. Der zweite Randbereich kann kürzer als der erste Randbereich sein. Ein dritter Randbereich der zweiten Einstülpung kann dem ersten Randbereich gegenüber liegen und sich als gegenüber liegende Seitenwandung des Durchführbereichs fortsetzen. Dem dritten Randbereich kann ein vierter Randbereich gegenüber liegen, welcher sich als eine Seitenwandung des Durchführbereichs fortsetzen kann. Der vierte Randbereich kann mit dem zweiten Randbereich gleich lang und / oder der erste Randbereich kann mit dem dritten Randbereich gleich lang sein. Der vierte Randbereich kann kürzer als der dritte Randbereich sein. Senkrecht zu dem ersten Randbereich setzt sich der fünfte Randbereich der ersten Einstülpung fort.

Gegenüber der ersten Einstülpung befindet sich die zweite Einstülpung mit dem dritten Randbereich. Der dritte Randbereich ist von dem ersten Randbereich beabstandet und parallel zu dem ersten Randbereich vorzugsweise ausgerichtet. Der dritte Randbereich setzt sich als sechster Randbereich fort, wobei im Querschnitt bzw. Draufsicht der sechste Randbereich senkrecht zu dem dritten Randbereich ausgerichtet ist.

Gegenüber dem ersten Randbereich befindet sich parallel zu diesem ein zweiter Randbereich, welcher gleichfalls die Seitenwandung des Durchführbereichs ist. Der zweite Randbereich ist kürzer als der erste Randbereich. Auch gegenüber dem dritten Randbereich befindet sich ein vierter Randbereich, wobei der dritte Randbereich und der vierte Randbereich parallel zueinander ausgerichtet sind. Der zweite Randbereich und der vierte Randbereich weisen übereinstimmende Längen bzw. Abstand A4 auf. Der erste Randbereich und der dritte Randbereich weisen übereinstimmende Längen bzw. Abstand A 3 auf.

In einer Ausgestaltung des erfindungsgemäßen Kopplungssystems kann der Durchbruch des anderen Verbindungselementes einen in der Draufsicht rechteckig ausgebildeten Durchführbereich haben, der, vorzugsweise mittig, in einen hohlzylinderförmig erweiterten Haltebereich übergeht. Der Haltebereich kann zwei symmetrisch zu seiner Zylinderachse A oder zu der Mitte-Längsachse A angeordneten Einstülpungen haben. Die Einstülpungen sind bevorzugterweise voneinander beabstandet und ragen in einen hohlzylinderförmigen Innenraum des Haltebereichs hinein. Da die Einstülpungen durch eine ebene Drehung um die Zylinderachse A zur Deckung gebracht werden können, können sie symmetrisch, z.B. zentralsymmetrisch, sein. Die Einstülpungen können bez. der Zylinderachse A des Haltebereichs entgegen gesetzt angeordnet sein.

Die erste Einstülpung in den Haltebereich hat in einer Ausgestaltung einen ersten Randbereich und einen fünften Randbereich. In Draufsicht auf den Durchbruch ist der fünfte Randbereich zu dem ersten Randbereich senkrecht ausgerichtet. Dem ersten Randbereich liegt ein zweiter Randbereich gegenüber. Der zweite Randbereich geht in einen bogenförmigen ersten Randbogen über, wobei der erste Randbogen sich um die Zylinderachse A erstreckt. Der erste Randbogen erstreckt sich in einen sechsten Randbereich, wobei der sechste Randbereich in einen senkrecht zu ihm ausgerichteten dritten Randbereich übergeht. Der dritte verläuft parallel zu dem ersten Randbereich. Dem dritten Randbereich liegt ein vierter Randbereich gegenüber, welcher in einen zweiten bogenförmigen Randbogen übergeht. Der vierte Randbereich ist zu dem zweiten Randbereich parallel ausgerichtet, welcher zweite Randbogen um die Zylinderachse A sich erstreckt. Der zweite Randbogen geht in den fünften Randbereich über, welcher parallel zu dem sechsten Randbereich ausgerichtet ist. Auch der erste Randbereich, der zweite Randbereich, der dritte Randbereich und der vierte Randbereich bilden im Wesentlichen die Seitenwandungen des Durchführbereichs. Hinzukommend verbinden Seitenbereiche als Seitenwände den ersten mit dem zweiten und den dritten mit dem vierten Randbereich. Die Seitenbereiche sind als senkrecht zu dem ersten Randbereich ausgerichtete Seitenwände ausgerichtet.

Der Durchbruch des anderen **Verbindungselements** kann sowohl von dem ersten bis zu dem sechsten Randbereich als auch von den Randbögen und den **Seitenwänden** seitlich begrenzt sein.

Vorzugsweise können der erste Randbereich und der dritte Randbereich einander flächenparallel sein; ebenso können der zweite Randbereich und der vierte Randbereich einander flächenparallel sein. Zudem ist es möglich, der erste Randbereich und der zweite Randbereich einander flächenparallel sind und / oder der dritte Randbereich und der vierte Randbereich einander flächenparallel sind. Vorzugsweise können die sechste und der fünften Randbereiche in Plattenebene senkrecht zu der Längserstreckung des Durchführbereichs ausgerichtet sein und z.B. die Randbögen viertelkreisbogenförmig oder mehr als viertelkreisbogenförmig sein.

Der durch den Durchführbereich längs dessen Mitte-Längsachse A hindurch geführte Halteabschnitt ist derart in dem Durchführbereich in dem eingeführten Zustand angeordnet, dass durch anschließendes Verschwenken des Halteabschnitts aus dem eingeführten Zustand in den geschwenkten Zustand in eine Richtung hin zu den Einstülpungen (siehe Pfeil) entgegen des Uhrzeigersinns die beiden gegenüber liegenden Eingriffsbereiche des Halteabschnitts den ersten und den zweiten Randbogen des Haltebereichs, vorzugsweise formschlüssig, aufnehmen. Das Verschwenken des Halteabschnitts erfolgt um die Mitte-Längsachse M bzw. Mitte-Längsachse A des Durchführbereichs zwecks Aufnahme des ersten und zweiten Randbogens in den Eingriffsbereich. Die Dicke der Randbögen bzw. deren Plattendicke kann dem Abstand A5 der Eingriffsbereiche entsprechen oder geringfügig größer als der Abstand A5 sein, um ein Verkantungsvermeidung beim Schwenkung.

Der erste Randbogen befindet sich zwischen dem zweiten Randbereich und dem sechsten Randbereich und der zweite Randbogen ist zwischen dem vierten Randbereich und dem fünften Randbereich angeordnet. Die Randbögen sind vorzugsweise viertelkreisförmig erstreckend um die Mitte-Längsachse A des Durchführbereichs bzw. Zylinderachse A des Haltebereichs ausgestaltet.

Der Halteabschnitt des einen Verbindungselementes wird durch den Durchführbereich mit seinem Kopfabschnitt entlang der Mitte-Längsachse A des Durchführbereichs hindurchgeführt, wobei die Mitte-Längsachse A des Durchführbereichs mit der Mitte-Längsachse M des einen Verbindungselements zusammen fällt. Der durch den Durchführbereich der hindurch geführte Halteabschnitt kann bezüglich seiner Mitte-Längsachse M bzw. der Mitte-Längsachse A zumindest um einen vorbestimmten Winkel, insbesondere um 90°, aus einem durchgeführten Zustand in einen verschwenkten Zustand verschwenkt werden. Das plattenförmige eine Verbindungselement mit seinem Halteabschnitt ist im verschwenkten Zustand quer zu dem plattenförmigen anderen Verbindungselements verklemmt und kann im verschwenkten Zustand längs der Mitte-Längsachse M bzw. der Mitte-Längsachse A des Durchführbereichs oder der Zylinderachse A des Haltebereichs nicht mehr heraus geführt werden. Es ist zuerst eine Rückschwenkung des in Querstellung zu dem anderen Verbindungselements befindlichen Halteabschnitts aus der Querstellung bzw. aus dem verschwenkten Zustand in den Durchführbarbereich erforderlich, um anschließend eine Rückbewegung des einen Verbindungselements mit seinem Halteabschnitts längs der Mitte-Längsachse A bzw. M zu ermöglichen.

Im verschwenkten Zustand umgreift der Halteabschnitt mit seinen Eingriffsbereichen die Randbögen bzw. die plattenförmigen Randbögenbereiche des anderen Verbindungselements, so dass die beiden Randbögen an den den Randbögen zugewandten Seiten von Kopfabschnitt, Verbindungsabschnitt und Abschnitt formschlüssig anliegen. Die beiden Einstülpungen begrenzen mit ihrem fünften und dem sechsten Randbereichen die Schwenkbarkeit des Halteabschnitts und definieren den Schwenkwinkel des einen Verbindungselements, welcher vorzugsweise 90° ist, da der plattenförmige Verbindungsabschnitt mit einer Seite an dem sechsten Randbereich des Haltebereichs und mit seiner anderen Seite an dem fünften Randbereich des Haltebereichs im geschwenkten Zustand anliegt. Der Schwenkwinkel kann abhängen von dem von dem ersten Randbereich und dem sechsten Randbereich umschlossenen Winkel, welcher vorzugsweise 90° beträgt. Der Schwenkwinkel kann größer oder kleiner als 90° sein.

Im geschwenkten Zustand liegen der Bereich des Kopfabschnitts und die Randbereiche des Abschnitts sowie der Grundrand des Verbindungsabschnitts gegen die drei Seiten der Randbögen bzw. der Randbögenbereiche des plattenförmigen anderen Verbindungselements an, umgreifen diese, so dass ein hinreichender Form-, Reib- und / oder Kraftschluss ermöglicht wird und die auf das eine Verbindungselement einwirkenden Kräfte im geschwenkten Zustand gleichmäßig auf die Randbögen bzw. deren Bereiche des Haltebereichs übertragen werden können.

Die hinreichende Lagesicherung durch den Eingriff des anderen Verbindungselementes mit seinen Randbögen in den Eingriffsbereich des einen Verbindungselementes wird infolge der Führung der Randbögen von beiden Seiten des Verbindungsabschnitts des Eingriffsbereichs unterstützt.

Es erweist sich von Vorteil, dass der Durchbruch und sein Durchführbercich seitlich durch die Seitenwände begrenzt werden, so dass in keinem Bereich des Durchbruchs und in den den Durchbruch umgebenden Bereichen des anderen Verbindungselements Verformungen bei Belastbarkeit, auch bei hoher Beanspruchung des einen Verbindungselementes, bedingt durch hohe Tragkraft, im Gegensatz zum Stand der Technik auftreten.

Im Gegensatz zum Stand der Technik, bei welchem seitlich durch den Einführbereich das Verbindungselement mit seinem Halteabschnitt umständlicherweise einführbar war, wirkt die in Draufsicht allseitige Begrenzung des Durchbruchs der Verformbarkeit und mangelnder Statik des das andere Verbindungselements aufnehmenden Möbelteils entgegen; ein Ausbrechen oder Rissbildung, wie es im Bereich der Öffnung des Einführbereichs bei Belastung zu beobachten ist, ist bei dem erfindungsgemäßen Kopplungssystem nicht feststellbar.

Die beiden Verbindungselemente sind soweit einander angepasst, dass das Hindurchführen des Halteabschnitts durch den Durchführbereich, das anschließende Schenken des Halteabschnitts aus dem Durchführbereich in den Haltebereich in den verschwenkten Zustand und ggf. das Rückschwenken des Halteabschnitts aus dem verschwenkten Zustand aus dem Haltebereich in Richtung Durchführbereich ohne Verklemmen oder Verkanten erfolgen kann. Die Anordnung des zu dem Abschnitt sich verjüngenden, schmaler werdenden Grundabschnitts des einen Verbindungselements unterstützt das verkantenfreie Hindurchführen des Halteabschnitts. Auch das Verschwenken des einen Verbindungselements in Richtung Einstülpungen wird durch den Abschnitt erleichtert, weil nicht die gesamte dem freien Ende zugewandte Seite des Grundabschnitts an dem anderen Verbindungselement zu reiben vermag.

Die breite Auflage, die der Abschnitt im verschwenkten Zustand dem Bereich um die Randbögen bietet, sichert in hinreichender Weise ein gleichmäßiges Einwirken der Kräfte bei Belastung des durch erfindungsgemäße Kopplungssysteme verbundenen Sitzmöbelstücks.

Der Durchführbereich hat einen Durchmesser D2, der dem Abstand der beiden Seitenwände des Durchführbereichs zueinander entsprechen kann. Der Durchführbereich hat eine Mitte-Längsachse A, die mit der Zylinderachse A des Haltebereichs übereinstimmen kann.

Da die Verbindungselemente einander angepasst sind, schließen die folgenden Maßangaben eine gewisse, wenn auch vernachlässigbare, Toleranz in den Maßverhältnissen der Teile zueinander ein, so dass das Hindurchführen und das Überführen von dem hindurchgeführten in den verschwenkten Zustand verkantungsfrei erfolgen können; in dem verschenkten Zustand wird jedoch eine durch z.B. Klemmsitz hervorgerufene Verbindung des einen mit dem anderen Verbindungselements möglich gemacht. Vorzugsweise entspricht der Durchmesser D2 des Durchführbereichs der Breite B1 des Kopfabschnitts oder D2 ist geringfügig größer, weil durch den Durchführbereich der Kopfabschnitt hindurchgeführt wird, ohne dass dieser sich bei Schwenkung verklemmen oder verkanten kann. Der Durchmesser D3 des Haltebereichs kann im wesentlichen der Breite B 2 des Verbindungsabschnitts entsprechen oder ist geringfügig größer zwecks Verkantungsvermeidung. Die Breite B2 des Verbindungsabschnitts entspricht dem Abstand der beiden gegenüber liegenden Grundränder des Verbindungsabschnitts voneinander. Die Breite B1 des Kopfabschnitts entspricht dem Abstand der gegenüber liegenden Seiten des Kopfabschnitts. Die gegenüber liegenden Seiten des Kopfabschnitts sind in der Draufsicht senkrecht zu der der Spitze des Halteabschnitts zugewandten Seite bzw. Randbereich des Abschnitts ausgerichtet sind.

Der zweite Randbereich des anderen Verbindungselements hat einen Abstand A4. Der Abstand A4 ist derjenige Abstand zwischen dem Übergangsbereich von dem zweiten Randbereich in den ersten Randbogen bzw. von dem vierten Randbereich in den zweiten Randbogen und den die beiden Seiten des Durchführbereichs begrenzenden Seitenwänden.

Der Abstand A1 ist der Abstand des dritten Randbereichs zu dem vierten Randbereich bzw. der Abstand des zweiten Randbereichs zu dem ersten Randbereich. Der Abstand A1 entspricht im wesentlichen oder ist geringfügig größer als die Dicke des plattenförmigen Halteabschnitts. Geringfügig größer kann der Abstand A1 sein, um den Halteabschnitt ohne Verkanten oder Verklemmen durch den Durchführbereich hindurchzuführen. Vorzugsweise kann der Flächenabstand A1 des ersten von dem zweiten Randbereich bzw. des dritten von dem vierten Randbereich der Breite der Durchführöffnung entsprechen.

Auch kann der Flächenabstand A 1 zwischen dem ersten und dem zweiten Randbereichen der Dicke D1 des Halteabschnitts des einen Verbindungselements entsprechen oder A1 geringfügig größer als D1 sein. Zudem ist es möglich, dass der Flächenabstand A 2 zwischen dem fünften und dem sechsten Randbereichen der Dicke D1 des einen Verbindungselements entspricht. D1 kann der Plattendicke der plattenförmigen Halteabschnitt entsprechen.

Der Abstand A2 ist der Abstand der Ebene des fünften Randbereichs von der des sechsten Randbereichs und kann gleichfalls der Plattendicke des Halteabschnitts entsprechen.

Das erfindungsgemäße Kopplungssystem kann für Möbel bzw. Möbelstücke verwendet werden, deren Möbelteile, wie Träger, Stützen und / oder sonstige Teile mit Hilfe des erfindungsgemäßen Kopplungssystems lösbar gekoppelt werden können. Die Möbelteile sind vorzugsweise plattenförmig ausgebildet. Vorzugsweise sind die Möbelteile mit Holz, steinartigen Materialien, Keramik und / oder kunststoffartigen Materialien hergestellt.

Das erfindungsgemäße Sitzmöbelstück kann Stützen und Trägern und sonstige Möbelteile umfassen. Die Stützen und Träger als Möbelteile werden durch das erfindungsgemäße Kopplungssysteme lösbar verbunden ohne Zuhilfenahme von Werkzeugen. An den Trägern können die einen Verbindungselemente mit den Halteabschnitten angeformt sein. In die Stützen können die Durchbrüche der anderen Verbindungselemente ausgefräst sein, die zur Aufnahme der Halteabschnitte zur Bereitstellung der jeweiligen Verbindungen geeignet sind. Einer der Träger kann als Sitzplatte ausgebildet sein. Ein weiterer Träger kann als Rückenplatte verwendet werden.

An die Rückenplatte können die einen Verbindungselemente mit den Halteabschnitten zum Zusammenwirken mit den Durchbrüchen der anderen Verbindungselemente der Stützen angeformt sein. Aus der Rückenplatte ist vorzugsweise mindestens eine Ausnehmung herausgefräst, welche in Höhe der Sitzplatte im zusammengebauten unbelasteten Zustand des Sitzmöbelstücks angeordnet ist. Im Sinne der Erfindung wird auch unter unbelastetem Zustand verstanden, dass auf das erfindungsgemäße Sitzmöbelstück nach dessen Zusammenbau keine durch einen sitzenden Benutzer ausgeübte Kraft einwirkt. Die Sitzplatte kann sich in ihrem der Rückenplatte zugewandeten Bereich zu einem, z.B. plattenförmigen, Zungenabschnitt verjüngen. Ebenso kann an der der Rückenplatte zugewandten Seite der Sitzplatte ein Zungenabschnitt angeformt oder gekoppelt sein.

Der Zungenabschnitt kann vorzugsweise in die Ausnehmung der Rückplatte 93a hineinragen oder durch die Ausnehmung so weit herausgeführt sein, dass zumindest ein Teil des Zungenabschnitts hervorragt. Der Zungenabschnitt kann in der Ausnehmung der Rückenplatte zentriert ausgerichtet sein, so dass zum Beispiel im unbelasteten Zustand der Zungenabschnitt nicht an den die Ausnehmung begrenzenden Seiten anzuliegen vermag. Ebenso ist es möglich, dass der Zungenabschnitt im unbelasteten Zustand gegen die untere der die Ausnehmung begrenzenden Seiten mittels einer Kraftbeaufschlagung anzuliegen vermag.

In einer weiteren Ausgestaltung kann der aus der Ausnehmung herausgeführte vordere Teil des Zungenabschnitts, welcher der Sitzplatte abgewandt ist, mit einer Stiftverbindung ohne Zuhilfenahme von Werkzeugen gesichert werden. Als Stiftverbindungen eignen sich Stifte, Spannstifte, Kerbstifte, usw., welche in einen Durchbruch eingeführt werden, der in dem vorderen herausgeführten Teil des Zungenabschnitts ausgefräst ist. Die Stiftverbindungen können zusätzlich mit Sicherungselementen lösbar gesichert werden, ohne den Auseinanderbau zu behindern.

Das erfindungsgemäße Sitzmöbelstück mit Stützen und Trägern als Möbelteile ist rasch und ohne Anforderungen an die Geschicklichkeit des Benutzers herstellbar, indem die Stützen und Träger als Möbelteile durch das erfindungsgemäße Kopplungssystem lösbar verbunden werden durch
a) durch Einführen der Halteabschnitte der Rückenplatte in die Durchführbereiche der Durchbrüche der Seitenteile,
b) Überführen der Halteabschnitte in den geschwenkten Zustand durch Hochklappen der Rückenplatte bis zum Anschlag der Verbindungsabschnitte der Halteabschnitte an die Einstülpungen oder an die Randbereiche der Einstülpungen,
c) Einführen der Halteabschnitte der Sitzplatte in die Durchbrüche der Seitenteile,
d) Überführen der Halteabschnitte der Sitzplatte in den geschwenkten Zustand durch Niederschwenken der Sitzplatte mit Einführen des Zungenabschnitts in die Ausnehmung der Rückplatte bis zum Anschlag der Verbindungsabschnitte der Halteabschnitte an die Einstülpungen oder an die Randbereiche der Einstülpungen.

Die Flexibilität des Zusammenbaus des erfindungsgemäßen Sitzmöbelstück zeigt sich auch dadurch, dass zum Zusammenbau die Schritte verändert werden können, so dass das erfindungsgemäße Sitzmöbelstück mit Stützen und Trägern als Möbelteile herstellbar sein kann, indem die Stützen und Träger als Möbelteile durch das erfindungsgemäße Kopplungssystem lösbar verbunden werden durch
a. durch Einführen der Halteabschnitte der Rückenplatte in die Durchführbereiche der Durchbrüche der Seitenteile,
b. nach geringfügigem Hochklappen derselben Einführen der Halteabschnitte der Sitzplatte in die Durchbrüche der Seitenteile,
c. Überführen der Halteabschnitte der Rückenplatte in den geschwenkten Zustand durch Hochklappen der Rückenplatte bis zum Anschlag der Verbindungsabschnitte der Halteabschnitte an die Einstülpungen oder an die Randbereiche der Einstülpungen,
d. Überführen der Halteabschnitte der Sitzplatte in den geschwenkten Zustand durch Niederschwenken der Sitzplatte mit Einführen des Zungenabschnitts in die Ausnehmung der Rückplatte bis zum Anschlag der Verbindungsabschnitte der Halteabschnitte an die Einstülpungen oder an die Randbereiche der Einstülpungen.

Die Zeichnungen zeigen weitere vorteilhafte zweckmäßige Ausgestaltungen des Erfindungsgegenstandes aufgrund der zeichnerischen Vereinfachung in schematischer, stark vergrößerter Weise, ohne Anspruch auf eine maßstabsgetreue Wiedergabe in Ausführungsformen ohne Beschränkung auf die Erfindung auf diese in
Fig. 1 die Draufsicht bzw. den Querschnitt auf das eine Verbindungselement mit Halteabschnitt,
Fig. 2 die Draufsicht auf den vergrößerten Halteabschnitt des einen Verbindungselementes,
Fig. 3 die Draufsicht auf den Durchbruch des anderen Verbindungselementes,
Fig. 4 die Draufsicht auf den stark vergrößerten Durchbruch des anderen Verbindungselementes,
Fig. 5 die Draufsicht auf den Durchbruch des anderen Verbindungselementes mit Angaben der Abstände und Durchmesser,

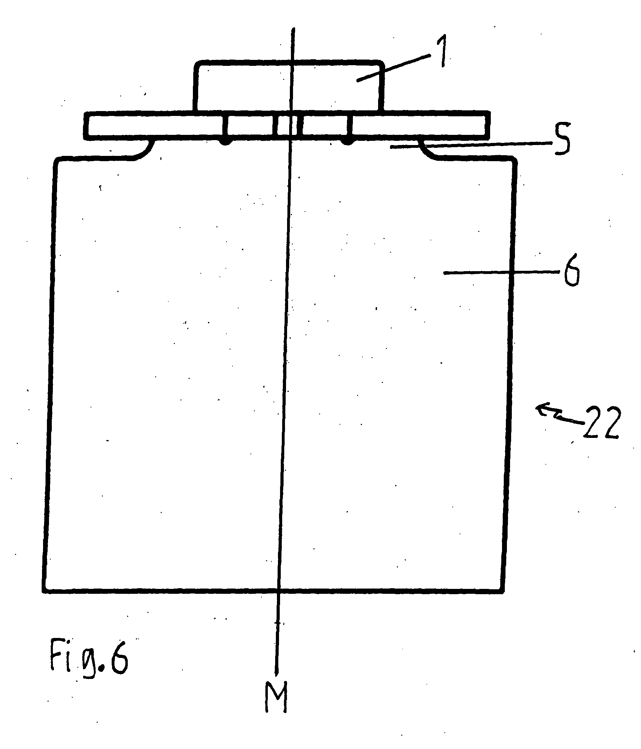

Fig. 6 die Draufsicht auf das eine Verbindungselement im geschwenkten Zustand im Eingriff des einen Verbindungselementes mit dem anderen Verbindungselement,

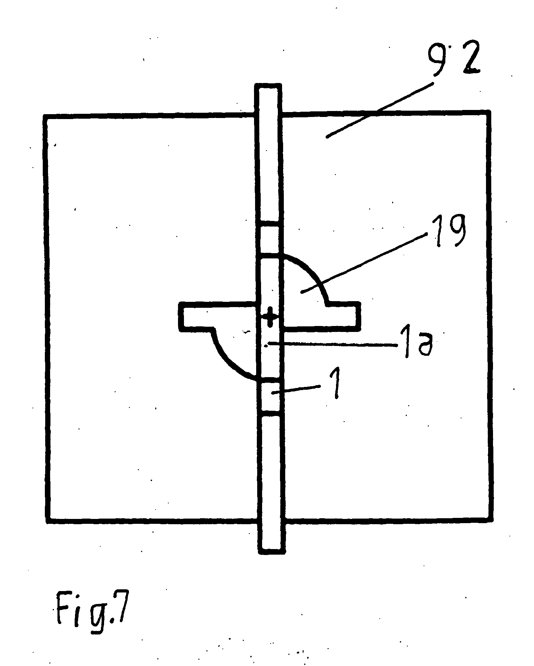

Fig. 7 die vergrößerte Seitenansicht auf ein Seitenteil als Stütze im geschwenkten Zustand,

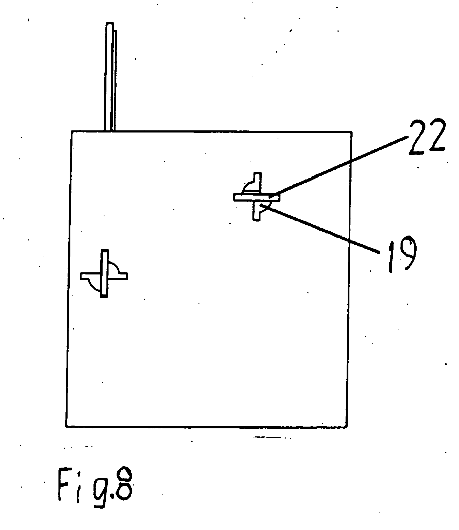

Fig. 8 die Seitenansicht auf das Seitenteil mit anderem Verbindungselement im geschwenkten Zustand,

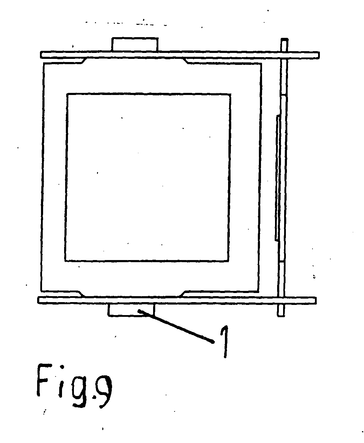

Fig. 9 die Sicht auf die Sitzfläche eines Möbelstücks mit dem anderen Verbindungselement,

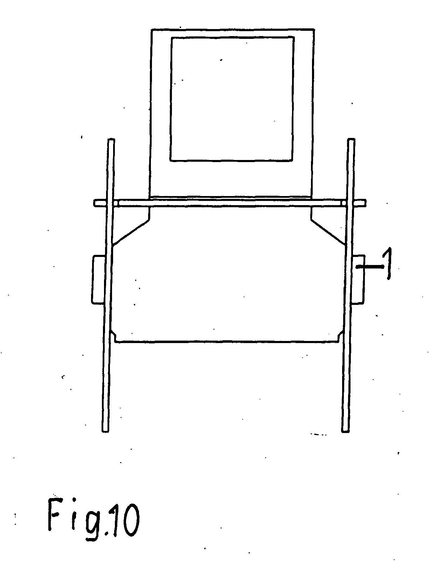

Fig. 10 die Vorderansicht auf ein Möbelstück, hier einen Stuhl,

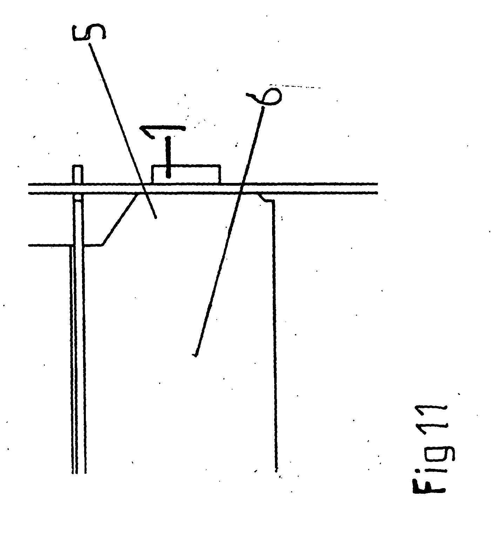

Fig. 11 die Vorderansicht auf ein Möbelstück,

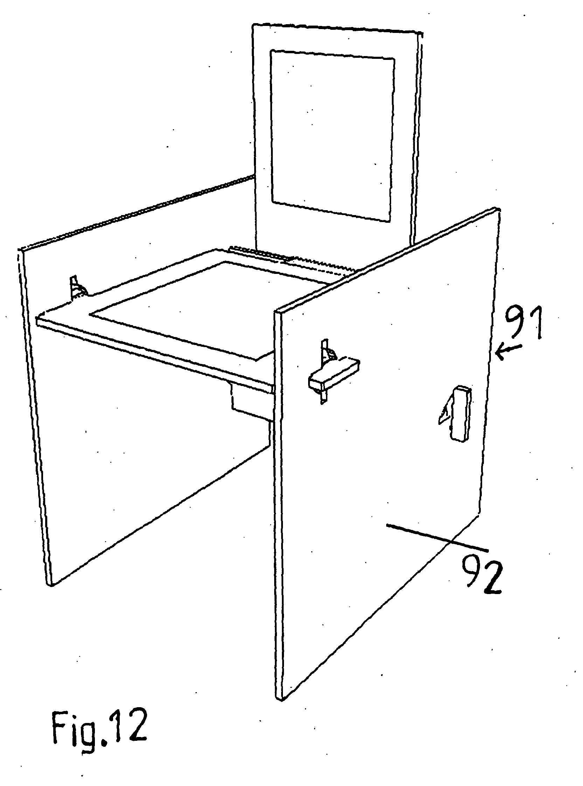

Fig. 12 Schrägansicht auf eine erfindungsgemäßes Möbelstück, hier einen Stuhl,

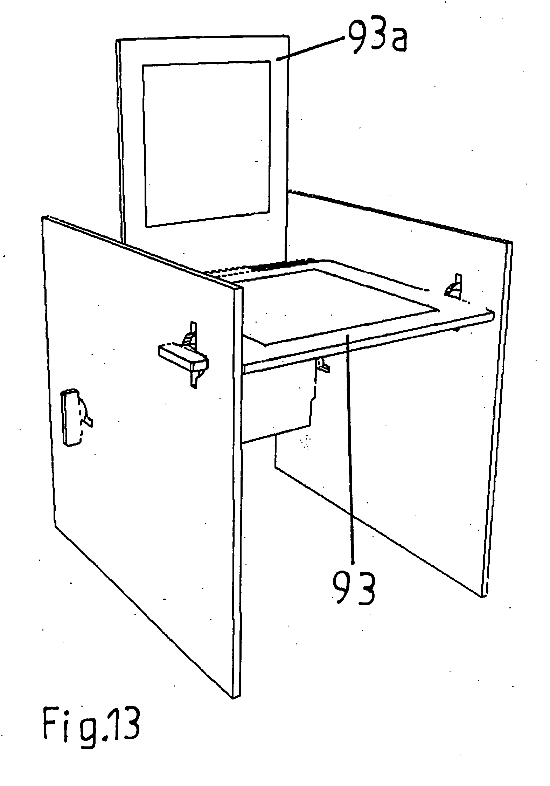

Fig. 13 Seitenansicht auf eine erfindungsgemäßes Möbelstück, hier einen Stuhl,

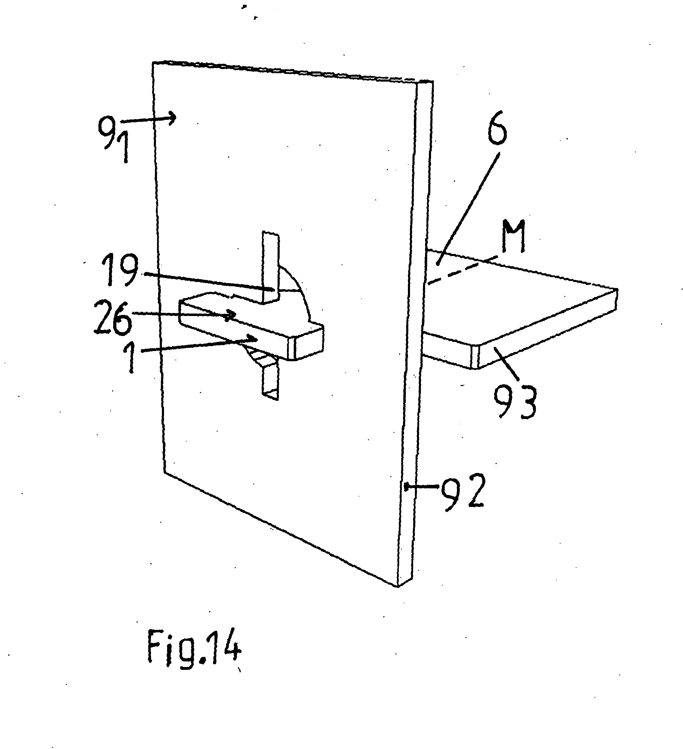

Fig. 14 Ansicht auf die mittels des erfindungsgemäßen Kopplungssystems verbundenen Stützen und Träger eines Möbelstücks,

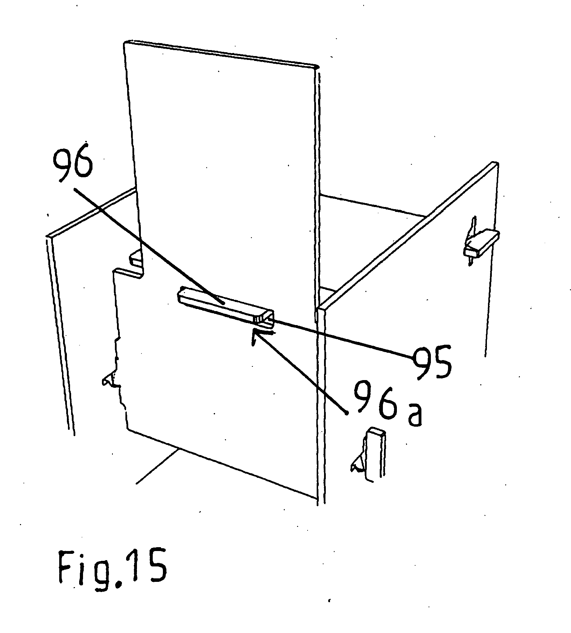

Fig. 15 Rückansicht auf ein erfindungsgemäßes Sitzmöbelstück mit durch die Ausnehmung der Rückplatte teilweise hindurchgeführtem Zungenabschnitt der Sitzplatte.
   und

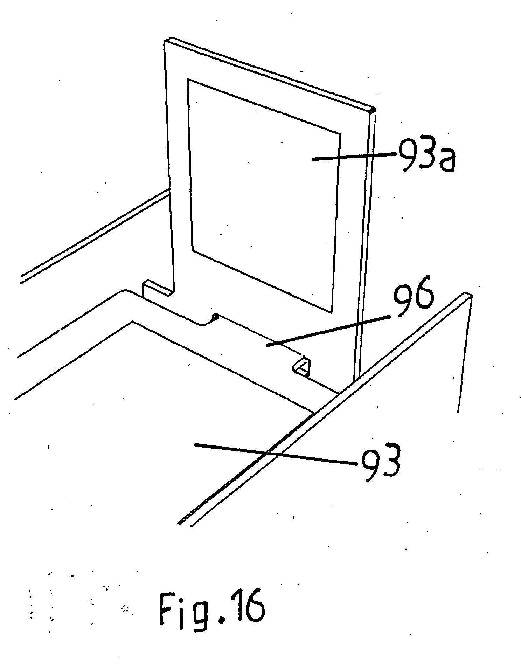

Fig. 16 Schrägansicht auf ein erfindungsgemäßes Sitzmöbelstück, hier einen Stuhl, mit Zungenabschnitt der Sitzplatte und mit Ausnehmung der Rückplatte.

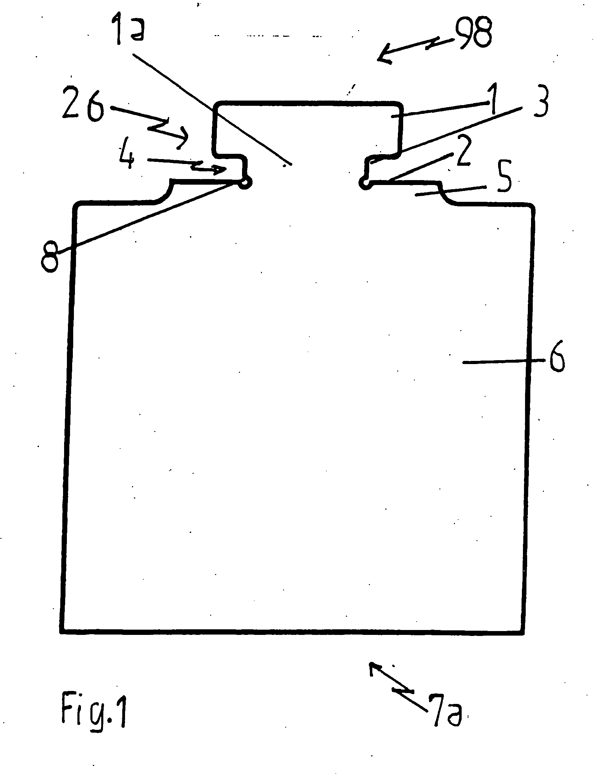

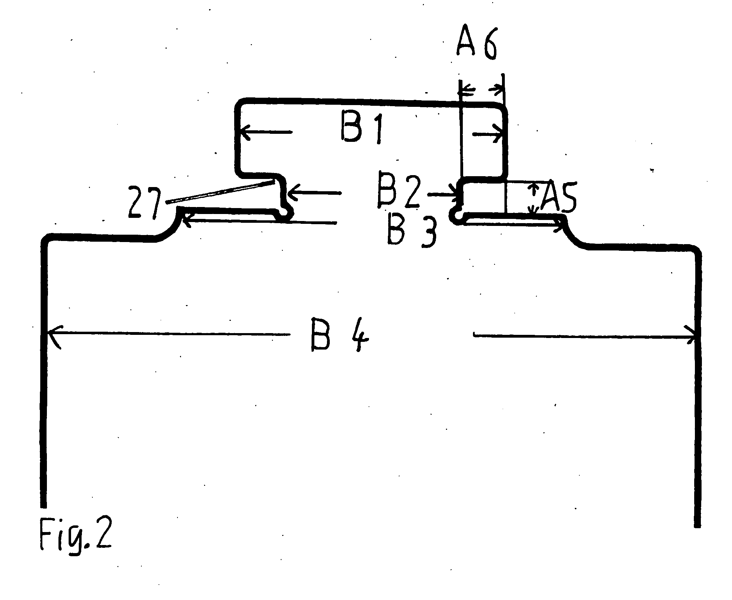

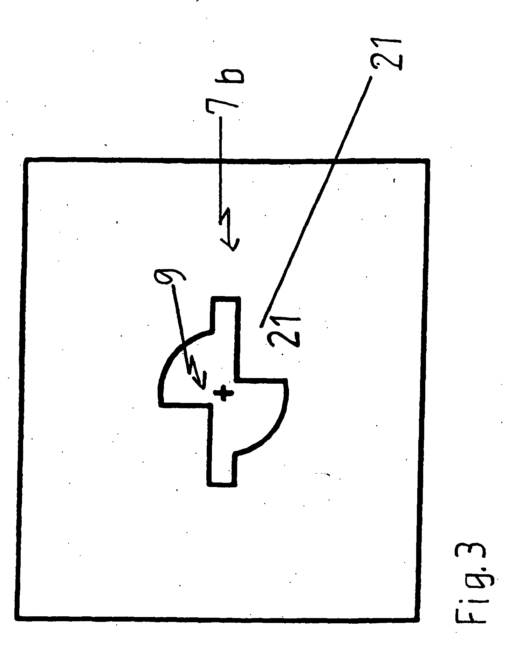

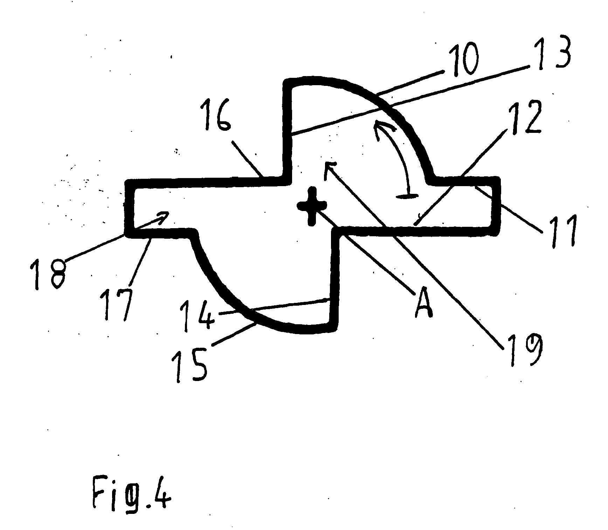

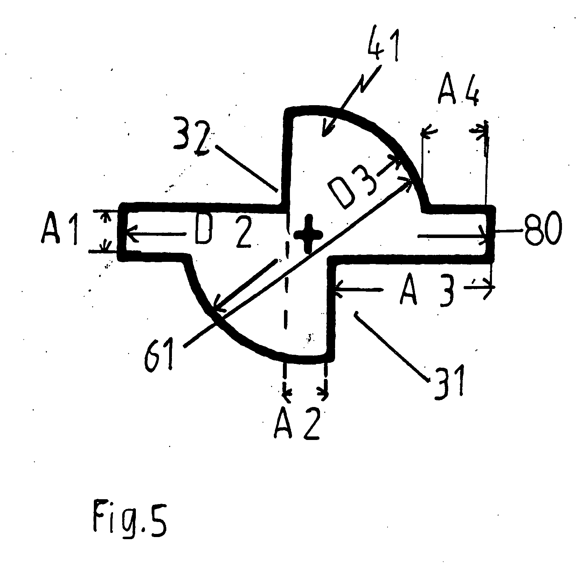

Die Abbildungen Fig. 1 bis Fig. 5 zeigen den Querschnitt des erfindungsgemäßen Kopplungssystems.

Das eine Verbindungselement 7a ist plattenförmig ausgebildet bzw. Teil einer Platte 22. An den beiden Enden des einen Verbindungselementes 7a sind Halteabschnitte 26 ausgebildet. Jeder Halteabschnitt 26 umfasst einen Kopfabschnitt 1, einen Verbindungsabschnitt 1a, einen Abschnitt 5 und einen Grundabschnitt 6. Der Grundabschnitt 6 geht in den Abschnitt 5 über, welcher sich in Richtung freiem Ende 98 verjüngt. Der Grundabschnitt 6 kann in einem weiteren Ausführungsbeispiel ohne Abschnitt 5 in den Verbindungsabschnitt 1a übergehen.

Der Abschnitt 5 geht in den Verbindungsabschnitt 1a über, welcher sich als Kopfabschnitt 1 fortsetzt. Der Kopfabschnitt 1 bildet mit dem Verbindungsabschnitt 1a und dem Abschnitt 5 die beiden gegenüber liegenden Eingriffsbereiche 4. Die Eingriffsbereiche 4 sind schlitzförmig. In die Eingriffsbereiche 4 greifen die plattenförmigen Randbögen 10, 15 des Haltebereichs 19 des anderen Verbindungselementes 7b ein.

Der Eingriffsbereich 4 wird von dem Bereich 27 des Kopfabschnitts 1 und dem Randbereich 2 des Abschnitts 5 sowie von dem zwischen dem Bereich 27 und dem Randbereich 2 angeordneten Grundrand 3 seitlich begrenzt. Der Eingriffsbereich 4 ist zu einer Seite offen. Der Grundrand 3 geht in den Randbereich 2 des Abschnitts 5 bzw. des Grundabschnitts 6 unter Bildung einer Einstülpnut 8 über. Die Einstülpnut 8 ist senkrecht zu der Mitte-Längsachse M des einen Verbindungselementes 7a ausgerichtet. Das eine Verbindungselement 7a ist mit seinen beiden Halteabschnitte 26 oder zumindest mit einem Halteabschnitt 26 einstückig ausgebildet.

Durch die Einstülpnut 8 wird das Einreißen des Übergangsbereichs von Grundabschnitt 6 zu dem Verbindungsabschnitt 1a beim Schwenken des Halteabschnitts 26 in dem Haltebereich 19 in den verschwenkten Zustand wirkungsvoll verhindert.

Das andere Verbindungselement 7b ist als Teil einer Platte mit einem Durchbruch 9, welche aus der Platte 22 ausgefräst ist.

Unter Durchbruch 9 wird im Sinne der Erfindung auch verstanden, eine Öffnung in dem anderen Verbindungselement 7b, welche in der Draufsicht auf das andere Verbindungselement 7b seitlich begrenzt ist, welche Öffnung von der Seite nicht zugänglich sein kann.

Der Durchbruch 9 umfasst einen Durchführbereich 18 und einen Haltebereich 19. Der Durchführbereich 18 geht zumindest teilweise in einen hohlzylinderförmig erweiterten Haltebereich 19 über. Der Durchführbereich 18 ist in der Draufsicht rechteckig und ist den Halteabschnitt 26 angepasst. Der Durchführbereich 18 ermöglicht das Hindurchführen des Halteabschnitts 26 mit seinem Kopfabschnitt 1 längs der Mitte-Längsachse A des Durchführbereichs. Der Haltebereich 19 ist hohlzylinderförmig, in welchen Einstülpungen 31, 32 hineinragen. Die Einstülpungen können durch eine ebene Drehung, vorzugsweise von 180°, um die Zylinderachse A des Haltebereichs 19 zur Deckung gebracht werden. Da der in den Haltebereich 19 bis zum Anschlag verschwenkte Verbindungsabschnitt 1a des Halteabschnitts 26 durch die Einstülpungen 31, 32 nicht weiter entgegen des Uhrzeigersinns geschwenkt werden kann, sondern nur in Gegenrichtung zurück in den Durchführbereich 18 schwenkbar ist, wird die Drehrichtung des Halteabschnitts 26 durch die Einstülpungen 31, 32 begrenzt. Durch den in den Haltebereich 19 bis zum Anschlag verschwenkten Verbindungsabschnitt 1a des Halteabschnitts 26 wird die durch den hinreichenden Klemmsitz beider Verbindungselemente 7a, 7b hervorgerufene Verbindung bereitgestellt.

Im verschwenkten Zustand in dem Haltebereich 19 liegt der Verbindungsabschnitt 1a an dem fünften Randbereich 14 und einem sechsten Randbereich 13 des Haltebereichs 19 Fläche an Fläche an. Die Schwenkachse oder Drehachse des Haltebereichs 19 stimmt mit der Mitte-Längsachse M des einen Verbindungselements 7a und mit der Zylinderachse und der Mitte-Längsachse A des Durchführbereichs 18 des Haltebereichs 19 überein.

Der Durchführbereich 18 hat auch gegenüber liegende Seitenwandungen. Die gegenüber liegenden versetzt zueinander angeordneten Seitenwandungen 12 mit 16 bzw. 11 mit 17 bzw. 13 mit 14 entsprechen in ihrer Länge. Der Durchführbereich 18 hat eine Mitte-Längsachse A. Entlang der Mitte-Längsachse A wird der Halteabschnitt 26 hindurchgeführt, so dass die Randbögen 10 und 15 in Höhe der Eingriffsbereiche angeordnet sind und der Kopfanschnitt 1 sich außerhalb des Durchführbereichs befindet.

Der Haltebereich 19 ist in der Draufsicht kreisbogenförmig. Der Haltebereich 19 ist bez. seines Innenraums zylindrisch ausgebildet und hat eine Mitte-Längsachse A, die seiner Zylinderachse A entsprechen kann. Der Haltebereich 19 wird in der Draufsicht auch von zwei annähernd viertelkreisbogenförmigen Randbögen 10, 15 begrenzt. Die Viertelkreisbögen der Randbögen 10 und 15 entsprechen einander. In den Haltebereich 19 greifen zwei Einstülpungen 31, 32 ein. Die beiden voneinander abgesetzten Einstülpungen 31, 32 können zu der Zylinderachse A bzw. Mitte-Längsachse A symmetrisch einander ausgerichtet oder einander zentralsymmetrisch ausgerichtet sein. Die Zylinderachse A stimmt mit der Mitte-Längsachse A des Haltebereichs 19 bzw. der des Durchführbereichs 18 überein.

Die erste Einstülpung 31 hat einen ersten Randbereich 12, welcher sich als eine Seitenwandung des Durchführbereichs 18 fortsetzt. Dem ersten Randbereich 12 liegt ein zweiter Randbereich 11 gegenüber. Der zweite Randbereich 11 ist zu dem ersten Randbereich 12 parallel zueinander ausgerichtet. Der erste Randbereich 12 ist länger als der zweite Randbereich 11. Die zweite Einstülpung 32 weist gleichfalls einen dritten Randbereich 16 auf, der sich als Seitenwandung des Durchführbereichs 18 fortsetzt. Gegenüber dem dritten Randbereich 16 liegt ein vierter Randbereich 17, welcher parallel zu dem dritten Randbereich 16 ausgerichtet ist. Der vierte Randbereich 17 hat in der Draufsicht die gleiche Länge wie der zweite Randbereich 11 und der erste Randbereich 12 hat in der Draufsicht die gleiche Länge wie der dritte Randbereich 16. Der Durchbruch umfasst den Durchführbereich 18 und den Haltebereich 19 und ist in der Draufsicht seitlich begrenzt.

In der Draufsicht auf den Durchbruch 9 begrenzen seitlich die ersten bis zu den sechsten Randbereichen 11, 12, 14, 17, 16, 13, die Randbögen 10, 15 und die Seitenbereiche 80 den Durchbruch 9. Der Innenraum 41 des Durchbruchs 9 des anderen Verbindungsteils 7b wird auch von den als Seitenwandungen ausgebildeten ersten bis zu den sechsten Randbereichen 11, 12, 14, 17, 16, 13, von den Randbögen 15, 10 und von den als Seitenwände ausgebildeten Seitenbereichen 80 begrenzt. Der Durchbruch 9 ist in der Draufsicht nicht seitlich offen.

Der Abstand A1 zwischen dem dritten Randbereich 16 und dem vierten Randbereich 17 bzw. zwischen dem ersten Randbereich 12 und dem zweiten Randbereich 11 entspricht in etwa der Dicke oder Plattendicke des Halteabschnitts 26 des einen Verbindungselementes 7a. Der Abstand A1 kann geringfügig größer sein als die Plattendicke, um das Hindurchführen des Halteabschnitts 26 mit seinem Kopfabschnitt 1 durch den Durchführbereich 18 zu erleichtern und Verkantungen zu vermeiden. Die ersten, der zweiten, dritten und vierten Randbereiche sind in Plattenebene parallel sowie der fünfte und der sechste quer zu der Längserstreckung des Durchführbereichs ausgerichtet; die Randbögen sind annähernd viertelkreisbogenförmig ausgebildet.

Der Durchmesser D3, welcher dem Abstand der beiden gegenüber liegenden Randbögen 10, 15 entspricht, entspricht im wesentlichen der Breite B2 des Verbindungsabschnitts 1a. B2 kann auch geringfügig kleiner als D3 sein, um Verkantungen oder Verklemmungen vermeiden. Daher kann bei Angaben von sonstigen Maß- und Größenverhältnissen dementsprechend Bezug genommen werden auf Begriffe, wie "etwa", "im Wesentlichen". Der Abstand A2 und der Abstand A1 können einander übereinstimmen und der Plattendicke des Halteabschnitts 26 des plattenförmigen einen Verbindungselements 7a entsprechen.

Der Haltebereich 19 ist zudem sowohl durch die beiden gegenüber liegenden, versetzt zueinander oder beabstandet voneinander angeordneten Einstülpungen 31, 32 wie auch durch die beiden viertelkreisbogenförmigen gegenüber liegenden Randbögen 10, 15 gekennzeichnet; der Haltebereich 19 wird von seinen Seitenwandungen, z.B. von dem 6. Randbereich 13, dem 5. Randbereich, dem ersten Randbogen 10 und dem zweiten Randbogen des Haltebereichs 19, begrenzt. Der Haltebereich 19 ist in der Draufsicht auf die Plattenebene zumindest teilweise kreisförmig ausgebildet, sein Kreismittelpunkt oder Zylinderachse A fällt mit der Mitte-Längsachse A der Durchführöffnung 18 zusammen.

Zwecks Verbindung beider Verbindungselemente 7a, 7b miteinander werden diese rechtwinklig zueinander ausgerichtet. Der Halteabschnitt 26 wird mit seinem Kopfabschnitt 1 durch den Durchführbereich 18 hindurch geführt, so dass der Eingriffsbereich 4 in Höhe der plattenförmigen Einstülpungen 31, 32 sich befindet. Vorzugsweise ist das andere Verbindungselement 7b gleichfalls plattenförmig ausgebildet. Der Halteabschnitt 26 wird in Richtung Einstülpungen 31, 32 (siehe Pfeil) entgegen des Uhrzeigersinns geschwenkt und legt sich mit seinem Verbindungsabschnitt 1a an den fünften Randbereich 14 und an den sechsten Randbereich 13 der beiden Einstülpungen 31, 32 des Haltebereichs 19 an. Gleichzeitig nehmen die beiden gegenüber liegenden Eingriffsbereiche 4 die beiden plattenförmigen kreisbogenförmigen Randbögen 10, 15 auf, so dass jeder Randbogen mit dem Kopfabschnitt 1 und dessen Bereich 27 auf dessen einen und mit dem Abschnitt 5 und dessen Randbereich 2 auf dessen anderen Seite im verschwenkten Zustand formschlüssig umgriffen ist, so dass eine durch Klemmsitz hervorgerufene Verbindung zwischen beiden Verbindungselementen ermöglicht wird. Die Verbindung wird untersützt durch Kraft und Reibschluss. Der Grundrand 3 des Verbindungsabschnitts 1a liegt an den Seitenwandungen 61 der Randbögen 10, 15 an.

Die Schwenkung des Halteabschnitts 26 in dem Haltebereich 19 um die Mitte-Längsachse A wird von den Einstülpungen 31, 32 und deren fünfte und sechste Randbereiche 14, 13 begrenzt und der Winkel beträgt 90°. Der Halteabschnitt 26 im verschwenkten Zustand befindet sich in Querstellung zu dem anderen Verbindungsteil 7b. Im verschwenkten Zustand kann das eine Verbindungselement 7a aus dem Haltebereich 19 entlang der Mitte-Längsachse A nicht bewegt werden, weil die Randbögen 10, 15 im festen Eingriff in den Eingriffsbereichen 4 sich befinden. Der in dem Haltebereich 19 verschwenkte Halteabschnitt 26 ermöglicht den festen Ortssitz der miteinander gekoppelten Verbindungselemente 7a, 7b.

Erst durch das Zurückschwenken des Halteabschnitts 26 (entgegen Pfeilrichtung) in Uhrzeiger um die Mitte-Längsachse A aus dem verschwenkten Zustand aus dem Haltebereich 19 in den eingeführten Zustand in dem Durchführbereich 18 ist ein anschließendes Rückführen des Halteabschnitts 26 längs der Mitte-Längsachse A aus dem Durchführbereich möglich.

Es zeigt sich, dass gerade das erfindungsgemäße Verbindungssystem im verschwenkten Zustand nicht nur einen hinreichenden Formschluss der beiden Verbindungselemente 7a, 7b einander ermöglicht, sondern auch einen Kraft- und Reibschluss. Durch die Begrenzung des Durchbruchs 9 von den beiden Randbögen 10, 15 , den Randbereichen 14, 12, 13, 16, 11, 17 der Einstülpungen 31, 32 bzw. Seitenwandungen und den Seitenwänden 80 des Durchführbereichs 18 können die Kräfte, die auf dem einen Verbindungselement 7a lasten, auf das andere Verbindungselement 7b und vice versa übertragen werden, ohne dass es in bestimmten Bereichen der einander gekoppelten Möbelteile zu Verformungen, Forminstabilitäten oder gar zum unbeabsichtigten Lösen der einander gekoppelten Verbindungselemente auftreten.

Bei Kopplung von Möbel 91 und Möbelteilen mit Hilfe des erfindungsgemäßen Kopplungssystems mit dem einen Verbindungselement 7a und dem anderen Verbindungselement 7b werden zum Beispiel die Seitenteile 92 als Stützen mit dem Durchbruch 9 des anderen Verbindungselements 7b ausgestaltet. Die Sitzfläche oder -platte 93 als Träger ist mit dem Halteabschnitt 26 des einen Verbindungselements 7a ausgebildet. Die erfindungsgemäßen Möbel zeigen, dass die Durchbrüche 19 im Gegensatz zu den Ausnehmungen herkömmlicher Verbindungssysteme nicht nur in den seitlichen Randbereichen der Möbelteile angeordnet werden können, sondern vielmehr es der Zweckmäßigkeit und dem Wunsch des Benutzers vorbehalten bleiben kann, zu entscheiden, in welchen Stellen Durchbrüche als anderes Verbindungselement angeordnet werden.

Ein erfindungsgemäßes Sitzmöbelstück umfasst mit Stützen und Trägem, wobei die Stützen 92 und Träger 93 als Möbelteile durch das erfindungsgemäße Kopplungssysteme lösbar verbunden sind. Die Stützen 92 und Träger 93 sind senkrecht zueinander ausgerichtet. In einem Ausführungsbeispiel sind an den Trägern 93 die einen Verbindungselemente 7a mit den Halteabschnitten angeformt sind und es weisen die Stützen 92 die Durchbrüche 9 der anderen Verbindungselemente 7b auf, in welche die Halteabschnitte 26 zur Bereitstellung der jeweiligen Verbindungen aufnehmbar sind. Ein Träger 93a ist als Sitzplatte und ein weiterer Träger ist als eine Rückenplatte 93a als Möbelteile aufgestaltet.

An die Rückenplatte 93a ist das eine Verbindungselement 7a mit den Halteabschnitten 26 zum Zusammenwirken mit den Durchbrüchen 9 der anderen Verbindungselemente 7b der Stützen 92 angeformt. Aus der Rückenplatte 93a ist mindestens eine Ausnehmung 95 herausgefräst, welche in Höhe der Sitzplatte 93 angeordnet ist. In der Draufsicht verjüngt sich die Sitzplatte 93 in ihrem der Rückenplatte 93a zugewandeten Bereich, so dass diese zu einem Zungenabschnitt 96 ausgebildet ist. Der Zungenabschnitt ragt in die Ausnehmung 95 der Rückplatte 93a hinein oder ist in einem weiteren Ausführungsbeispiel durch die Ausnehmung 95 zumindest teilweise hindurchgeführt. Der Zungenabschnitt 96 ist in der Ausnehmung 95 der Rückenplatte 93a zentriert ausgerichtet. In einem weiteren Ausführungsbeispiel (nicht gezeigt) wird der aus der Ausnehmung 95 herausgeführte vordere Teil 96a des Zungenabschnitts 96 mit einem in einen in dem vorderen Teil 96a ausgefrästen Durchbruch eingeführten Stift werkzeuglos gesichert.

Der Zusammenbau des erfindungsgemäßen Sitzmöbelstücks erfolgt auf einfache und rasche Weise ohne Zuhilfenahme von Werkzeugen oder sonstiger Hilfsmittel,
durch Einführen der Halteabschnitte 26 der Rückenplatte 93a in die Durchführbereiche 18 der Durchbrüche 9 der Seitenteile 92 und Überführen der Halteabschnitte 26 in den geschwenkten Zustand durch Hochklappen der Rückenplatte 93a, so dass die Halteabschnitte 26a in die Haltebereiche 19 bis zum Anschlag an die Einstülpungen 31, 32 bzw. an die Randbereiche 13, 15 der Einstülpungen 31, 32 in den geschwenkten Zustand geschwenkt werden,
Einführen der Halteabschnitte 26 der Sitzplatte 93 in die Durchbrüche 9 der Seitenteile 92 und
Überführen der Halteabschnitte 26 der Sitzplatte 93 in den geschwenkten Zustand durch Niederschwenken der Sitzplatte 93 mit Einführen des Zungenabschnitts 96 in die Ausnehmung 95 der Rückplatte 93a,
so dass die Halteabschnitte 26a in die Haltebereiche 19 bis zum Anschlag an die Einstülpungen 31, 32 bzw. an die Randbereiche 13, 15 der Einstülpungen 31, 32 in den geschwenkten Zustand geschwenkt werden.

Die Flexibilität des Zusammenbaus des erfindungsgemäßen Sitzmöbelstücks zeigt sich auch dadurch, dass zum Zusammenbau die Schritte verändert werden können, wie folgt in einem weiteren Ausführungsbeispiel
durch Einführen der Halteabschnitte 26 der Rückenplatte 93a in die Durchführbereiche 18 der Durchbrüche 9 der Seitenteile 92 und nach geringfügigem Hochklappen derselben Einführen der Halteabschnitte 26 der Sitzplatte 93 in die Durchbrüche 9 der Seitenteile 92,
Überführen der Halteabschnitte 26 der Rückenplatte 93a in den geschwenkten Zustand durch Hochklappen der Rückenplatte 93a, so dass die Halteabschnitte 26a in die Haltebereiche 19 bis zum Anschlag an die Einstülpungen 31, 32 bzw. an die Randbereiche 13, 15 der Einstülpungen 31, 32 in den geschwenkten Zustand geschwenkt werden,
Überführen der Halteabschnitte 26 der Sitzplatte 93 in den geschwenkten Zustand durch Niederschwenken der Sitzplatte 93 mit Einführen des Zungenabschnitts 96 in die Ausnehmung 95 der Rückplatte 93a,
so dass die Halteabschnitte 26a in die Haltebereiche 19 bis zum Anschlag an die Einstülpungen 31, 32 bzw. an die Randbereiche 13, 15 der Einstülpungen 31, 32 in den geschwenkten Zustand geschwenkt werden.

Der in der Ausnehmung 95 befindliche Zungenabschnitt 96 ermöglicht eine erhöhte Standsicherheit und Sitzsicherheit des erfindungsgemäßen Sitzmöbelstücks auch bei erhöhter Sitzbelastung desselben durch einen Benutzer. Zudem wird die Formstabilität des erfindungsgemäßen Sitzmöbelstücks durch den in der Ausnehmung angeordneten Zungenabschnitt beträchtlich vergrößert, weil das Rückfedern der Sitzplatte in Richtung Standfläche infolge hoher, auf die Sitzplatte einwirkender Kräfte durch das Aufliegen des Zungenabschnitts auf die untere Seite der Ausnehmung begrenzt wird.

Im Gegensatz zu dem Stand der Technik ist der zu einer Seite hin offene Einführbereich und die damit möglichst seitlich angeordnete Ausrichtung der Ausnehmung in einem Möbelteil nicht erforderlich.

Auch zeigt sich, dass durch die mit Hilfe des erfindungsgemäßen Kopplungssystems gekoppelten Möbelteile zu Möbel den ästhetischen Gesamteindruck nicht einschränken, sondern gar fördern und zu der Ausgewogenheit in Aussehen, Statik und Zweckmäßigkeit beitragen.

Hinzukommend wird durch das Hintergreifen der Randbögen 10, 15 durch die Eingriffsbereiche 4 mit Kopfabschnitt 1 und Abschnitt 5 das ungewollte Lösen der so hergestellten Verbindungen vermieden.

Zudem eignen sich für die Bereitstellung der mit Hilfe des erfindungsgemäßen Kopplungssystems gekoppelten Möbel und Teile derselben jegliche Materialien, wie Holz, steinartige Materialien, Keramik und / oder kunststoffartigen Materialien und Mischungen derselben.

Ebenfalls können die erfindungsgemäßen Möbel rasch und einfach entkoppelbar bzw. auseinander baubar und kostengünstig transportiert werden. Ebenso benötigen Möbelteile der auseinander genommenen erfindungsgemäßen Möbel wenig Platz bei deren Lagerung und zeichnen sich durch eine gewisse Robustheit bei Lagerung aus. Auch sind die erfindungsgemäßen Möbel unempfindlich Beschädigungen bieten ermöglichen einen raschen Zusammenbau der Möbelstücke.

Das erfindungsgemäße Sitzmöbelstück zeichnet sich
durch eine Stand- und Sitzsicherheit sowie
-durch eine hohe Belastbarkeit und hinreichende Dauerhaftigkeit der Verbindungen
durch eine zureichende Haltbarkeit der Möbelteile und deren Verbindungselemente als auch dessen Zusammenbau und dessen Abbau zeichnen sich
durch einen wenig zeitaufwendigen Aufbau
ohne die Zuhilfenahme von Werkzeugen und sonstiger Hilfsmittel
sowie
durch sehr geringe Anforderungen an die Geschicklichkeit des Benutzers,
und
geringsten Platzbedarf der Möbelteile bei Lagerung vorteilhafterweise aus.

## Patentansprüche

1. Kopplungssystem zum wieder lösbaren Verbinden von Möbelteilen, wobei das Kopplungssystem zwei plattenförmige Verbindungselemente (7a, 7b) aufweist, wobei
a. die Verbindungselemente (7a, 7b) relativ zueinander verlagerbar ausgebildet sind und zumindest eine wieder lösbare Verbindung zwischen den Möbelteilen herstellbar ist, das andere Verbindungselement (7b) einen Durchbruch (9) aufweist, mit dem ein erstes Möbelteil ausgestattet werden kann, und das eine Verbindungselement (7a) ein mit dem Durchbruch (9) in Eingriff bringbarer, an einem zweiten Möbelteil anordenbarer Halteabschnitt (26) ist,
b. der Halteabschnitt (26) des einen Verbindungselements (7a) einen Grundabschnitt (6), einen an den Grundabschnitt (6) sich anschließenden Abschnitt (5) und einen an den Abschnitt (5) sich anschließenden stegartigen Verbindungsabschnitt (1a) hat, der an dem freien Ende des Halteabschnitts (26) in einen hinterschnittenen Kopfabschnitt (1) übergeht,
c. der Kopfabschnitt (1) mindestens einen hinterschnittenen Bereich (27) hat, welcher mit einem zu dem hinterschnittenen Bereich (27) beabstandeten Randbereich (2) des Abschnitts (5) Eingriffsbereiche (4) für das andere Verbindungselement (7b) bildet, an dem Halteabschnitt (26) mindestens zwei entgegen gesetzt geöffnete Eingriffsbereiche (4) ausgebildet sind,
d. die Eingriffsbereiche (4) zu dem Verbindungsabschnitt (1a) hin von einem Grundrand (3) begrenzt sind,
**dadurch gekennzeichnet, dass**
e. der Abschnitt (5) sich in Richtung freien Endes des Halteabschnitts (26) in der Draufsicht verjüngt,
f. ein Übergangsbereich von dem Grundrand (3) in den Randbereich (2) des Abschnitts (5) unter Bildung einer Einstülpnut (8) eingezogen ist
und
g. die Einstülpnut (8) quer zu einer Mitte-Längsachse M des einen Verbindungselements (7a) ausgerichtet ist,
h. der Durchbruch (9) in der Draufsicht allseitig begrenzt ist, einen Durchführbereich (18) zum Hindurchführen des Halteabschnitts (26) des einen Verbindungselements (7a) mit seinem Kopfabschnitt (1) längs der Mitte-Längsachse A des Durchführbereichs (18) und einen Haltebereich (19) zur Aufnahme des Halteabschnitts (26) des einen Verbindungselements (7a) im verschwenkten Zustand umfasst,
i. der Durchführbereich (18) in der Draufsicht rechteckig ist und mittig in den hohlzylinderförmig erweiterten Haltebereich (19) übergeht, in welchen Einstülpungen (31, 32) hineinragen, die gegenüber liegend und beabstandet voneinander angeordnet sind,
j. wobei der Halteabschnitt (26) in dem verschwenkten Zustand mit seinem Verbindungsabschnitt (1a) an die Einstülpungen (31, 32) anschlägt.

2. Kopplungssystem nach Anspruch 1, **dadurch gekennzeichnet, dass**
die Schwenkung des durch den Durchführbereich längs dessen Mitte-Längsachse A hindurch geführten Halteabschnitts (26) in dem Haltebereich (19) aus dem eingeführten Zustand in den verschwenkten Zustand in eine Richtung hin zu den Einstülpungen (31, 32) um die Mitte-Längsachse A von den Einstülpungen (31, 32) und deren fünften Randbereich (14) und deren sechsten Randbereich (13) begrenzt ist und
der Verbindungsabschnitt (1a) des Halteabschnitts (26) in dem Haltebereich (19) durch die Einstülpungen (31, 32) bis zum Anschlag verschwenkt ist, das eine Verbindungselement (7a) mit seinem Halteabschnitt (26) im verschwenkten Zustand in Querstellung zu dem anderen Verbindungselement (7b) verklemmt, wobei der Bereich (27) des Kopfabschnitts (1) und die Randbereiche (2) des Abschnitts (5) sowie die Grundränder (3) des Verbindungsabschnitts (1a) gegen die drei Seiten der Randbögen (10, 15) des anderen Verbindungselements (7b) anliegen und diese zur Bereitstellung eines Form-, Reib- und / oder Kraftschlusses umgreifen.

3. Kopplungssystem nach Anspruch 1 oder 2, **dadurch gekennzeichnet, dass** die Schwenkung des Halteabschnitts (26) in dem Haltebereich (19) aus dem eingeführten Zustand in den verschwenkten Zustand um die Mitte-Längsachse A des Durchführbereichs (18) erfolgt.

4. Kopplungssystem nach einem der Ansprüche 1 bis 3, **dadurch gekennzeichnet, dass** zur Rückbewegung des einen Verbindungselements (7a) mit seinem Halteabschnitts (26) längs der Mitte-Längsachse A der in Querstellung zu dem anderen Verbindungselements (7b) befindliche Halteabschnitt (26) des einen Verbindungselements (7a) aus der Querstellung oder aus dem verschwenkten Zustand in den eingeführten Zustand um die Mitte-Längsachse A in den Durchführbarbereich (18) zurückgeschwenkt ist.

5. Kopplungssystem nach einem der Ansprüche 1 bis 4, **dadurch gekennzeichnet, dass** eine Breite B3 des Abschnitts (5) und / oder eine Breite B4 des Grundabschnitts (6) größer als eine Breite B1 des Kopfabschnitts 1 sind.

6. Kopplungssystem nach einem der Ansprüche 1 bis 5, **dadurch gekennzeichnet, dass** die Breite B3 des Abschnitts (5) um das 1,2 bis 2,0-Fache größer als die Breite B1 des Kopfabschnitts (1) ist.

7. Kopplungssystem nach einem der Ansprüche 1 bis 6, **dadurch gekennzeichnet, dass** eine Breite B4 des Grundabschnitts (6) größer als die Breite B3 des Abschnitts (5) ist.

8. Kopplungssystem nach einem der Ansprüche 1 bis 7, **dadurch gekennzeichnet, dass** der Haltebereich (19) zwei symmetrisch zu seiner Zylinderachse A angeordnete Einstülpungen (31, 32) hat, die Einstülpungen (31, 32) voneinander beabstandet sind und in einen hohlzylinderförmigen Innenraum (41) des Haltebereichs (19) hineinragend angeordnet sind.

9. Kopplungssystem nach einem der Ansprüche 5 bis 8, **dadurch gekennzeichnet, dass** ein Durchmesser D3 des Haltebereichs (19) geringer als die Breite B3 des Abschnitts (5) ist.

10. Kopplungssystem nach Anspruch 8 oder 9, **dadurch gekennzeichnet, dass** der Halteabschnitt (26) des einen Verbindungselements (7a) durch den Durchführbereich (18) dergestalt hindurchgeführt ist, dass der hindurchgeführte Halteabschnitt (26) bezüglich seiner Mitte-Längsachse M zumindest um einen vorbestimmten Winkel, insbesondere um 90°, aus dem durchgeführten Zustand in einen verschwenkten Zustand verschwenkbar ist, der Halteabschnitt (26) in dem verschwenkten Zustand nicht aus dem Haltebereich (19) längs der Zylinderachse A des Haltebereichs (19) rückführbar ist.

11. Kopplungssystem nach einem der Ansprüche 1 bis 10, **dadurch gekennzeichnet, dass** der in den Haltebereich (19) bis zum Anschlag verschwenkte Verbindungsabschnitt (1a) durch die Einstülpungen (31, 32) im verschwenkten Zustand nur in einer Drehrichtung begrenzt schwenkbar ist.

12. Kopplungssystem nach einem der Ansprüche 1 bis 11, **dadurch gekennzeichnet, dass** im verschwenkten Zustand der Verbindungsabschnitt (1a) an einem fünften Randbereich (14) und einem sechsten Randbereich (13) des Haltebereichs (19) anliegt und die Mitte-Längsachse M im verschwenkten Zustand mit der Zylinderachse A und / oder Mitte-Längsachse A des Durchführbereichs (18) des Haltebereichs (19) übereinstimmt.

13. Kopplungssystem nach einem der Ansprüche 1 bis 12, **dadurch gekennzeichnet, dass** die erste Einstülpung (31) einen ersten Randbereich (12) und einen fünften Randbereich (14) hat, der fünfte Randbereich (14) zu dem ersten Randbereich (12) senkrecht ausgerichtet ist, dem ersten Randbereich (12) ein zweiter Randbereich (11) gegenüber liegt, der zweite Randbereich (11) in einen bogenförmigen ersten Randbogen (10) übergeht, der erste Randbogen (10) sich um die Zylinderachse A erstreckt, der erste Randbogen (10) in einen sechsten Randbereich (13) übergeht, der sechste Randbereich (13) in einen senkrecht zu ihm ausgerichteten dritten Randbereich (16) übergeht, der dritte parallel zu dem ersten Randbereich (12) verläuft, dem dritten Randbereich (16) ein vierter Randbereich (17) gegenüberliegt, welcher in einen zweiten bogenförmigen Randbogen (15) übergeht, der vierte Randbereich (17) zu dem zweiten Randbereich (11) parallel ausgerichtet ist, welcher zweite Randbogen (15) um die Zylinderachse A sich erstreckt, der zweite Randbogen (15) in den fünften Randbereich (14) übergeht, welcher parallel zu dem sechsten Randbereich (13) ausgerichtet ist, die ersten (12), zweiten (M), dritten (16) und vierten (17) Randbereiche als Seitenwandungen des Durchführbereichs (18) ausgestaltet sind, welcher Durchführbereich (18) von senkrecht zu dem ersten Randbereich (12) ausgerichteten Seitenbereiche als Seitenwänden (80) seitlich begrenzt ist, wobei die eine Seitenwand (80) den ersten (12) mit dem zweiten (11) und die andere Seitenwand (80) den dritten (16) mit dem vierten Randbereich (17) verbinden.

14. Kopplungssystem nach einem der Ansprüche 1 bis 13, **dadurch gekennzeichnet, dass** der erste Randbereich (12), der dritte Randbereich (16), der zweite Randbereich (11) und /oder der vierte Randbereich (17) einander flächenparallel sind.

15. Kopplungssystem nach einem der Ansprüche 1 bis 14, **dadurch gekennzeichnet, dass** die Randbögen (10, 15) viertelkreisbogenförmig sind.

16. Kopplungssystem nach einem der Ansprüche 1 bis 15, **dadurch gekennzeichnet, dass** in der Draufsicht der Durchbruch (9) des anderen Verbindungselements (7b) vom ersten bis zum sechsten Randbereich (12, 11, 16, 17, 14, 13), von den Randbögen (15, 10) und von Seitenwänden (80) seitlich begrenzt ist.

17. Kopplungssystem nach einem der Ansprüche 1 bis 16, **dadurch gekennzeichnet, dass** der Durchmesser D3 des Haltebereichs (19) geringer als der Durchmesser D2 des Durchführbereichs (18) ist.

18. Kopplungssystem nach einem der Ansprüche 1 bis 17, **dadurch gekennzeichnet, dass** der Durchmesser D3 des Haltebereichs (19) der Breite B2 des Verbindungsabschnitts (1a) entspricht.

19. Kopplungssystem nach einem der Ansprüche 1 bis 18, **dadurch gekennzeichnet, dass** die Länge A4 des zweiten Randbereichs (11) und / oder die Länge A4 des vierten Randbereichs (17) dem Abstand A6 des Eingriffsbereichs (4) entsprechen.

20. Kopplungssystem nach einem der Ansprüche 1 bis 19, **dadurch gekennzeichnet, dass** die Dicke der Randbögen (10, 15) dem Abstand A5 des Randbereichs (2) des Abschnitts (5) von dem Bereich (27) des Kopfabschnitts (1) entspricht.

21. Kopplungssystem nach einem der Ansprüche 1 bis 20, **dadurch gekennzeichnet, dass** die Eingriffsbereiche (4) schlitzförmig ausgebildet sind.

22. Kopplungssystem nach einem der Ansprüche 1 bis 21, **dadurch gekennzeichnet, dass** das eine Verbindungselement einstückig ausgebildet ist.

23. Kopplungssystem nach einem der Ansprüche 1 bis 22, **dadurch gekennzeichnet, dass** das andere Verbindungselement einstückig ausgebildet ist.

24. Möbel, welche als Möbelteile Stützen, Träger und / oder sonstigen Teile, insbesondere Rücklehnen, umfassen, wobei die Stützen (92), die Träger (93) und / oder die sonstigen Teile der Möbel durch das Kopplungssystem nach mindestens einem der vorhergehenden Ansprüche einander lösbar verbunden sind.

25. Möbel nach Anspruch 24, **dadurch gekennzeichnet, dass** die Möbelteile plattenförmig ausgestaltet sind.

26. Möbel nach Anspruch 24 oder 25, **dadurch gekennzeichnet, dass** die Stützen (92) und / oder Träger (93) mit den Verbindungselementen (7a, 7b) ausgebildet sind,
die Verbindungselemente (7a, 7b) relativ zueinander verlagerbar ausgebildet sind und zumindest eine wieder lösbare Verbindung zwischen den Möbelteilen herstellbar ist, das andere Verbindungselement (7b) einen Durchbruch (9) in einem ersten Möbelteil umfasst und das eine Verbindungselement (7a) ein mit dem Durchbruch (9) in Eingriff bringbaren, an einem zweiten Möbelteil angeordneter Halteabschnitt (26) ist,
der Halteabschnitt (26) des einen Verbindungselements (7a) einen Grundabschnitt (6), einen an den Grundabschnitt (6) sich anschließenden Abschnitt (5) und einen an den Abschnitt (5) sich anschließenden stegartigen Verbindungsabschnitt (1a) hat, der an dem freien Ende des Halteabschnitts (26) in einen hinterschnittenen Kopfabschnitt (1) übergeht,
der Kopfabschnitt (1) mindestens einen hinterschnittenen Bereich (27) hat, welcher mit einem zu dem Bereich (27) beabstandeten Randbereich (2) des Abschnitts (5) einen Eingriffsbereich (4) für das andere Verbindungselement (7b) bildet, an dem Halteabschnitt (26) mindestens zwei entgegen gesetzt geöffnete Eingriffsbereiche (4) ausgebildet sind,
die Eingriffsbereiche (4) zu dem Verbindungsabschnitt (1a) hin von einem Grundrand (3) begrenzt sind,
der Abschnitt (5) sich in Richtung freien Endes des Halteabschnitts (26) in der Draufsicht verjüngt,
ein Übergangsbereich von dem Grundrand (3) in den Randbereich (2) des Abschnitts (5) unter Bildung einer Einstülpnut (8) eingezogen ist
und
die Einstülpnut (8) quer zu einer Mitte-Längsachse M des einen Verbindungselements (7a) ausgerichtet ist,
der seitlich begrenzte Durchbruch (9) des anderen Verbindungselementes (7b) einen in der Draufsicht rechteckig ausgebildeten Durchführbereich (18) hat, der mittig in einen hohlzylinderförmig erweiterten Haltebereich (19) übergeht, der Haltebereich (19) zwei symmetrisch zu seiner Zylinderachse A angeordnete Einstülpungen (31, 32) hat, die Einstülpungen (31, 32) voneinander beabstandet sind und in einen hohlzylinderförmigen Innenraum (41) des Haltebereichs (19) hineinragend angeordnet sind,
der Halteabschnitt (26) des einen Verbindungselements (7a) durch den Durchführbereich (18) dergestalt hindurchgeführt ist, dass der hindurchgeführte Halteabschnitt (26) bezüglich seiner Mitte-Längsachse M zumindest um einen vorbestimmten Winkel, insbesondere um 90°, aus dem durchgeführten Zustand in einen verschwenkten Zustand verschwenkbar ist, der Halteabschnitt (26) in dem verschwenkten Zustand mit seinem Verbindungsabschnitt (1a) an die Einstülpungen (31, 32) anschlägt und nicht aus dem Haltebereich (19) längs der Zylinderachse A des Haltebereichs (19) rückführbar ist
sowie
der in den Haltebereich (19) bis zum Anschlag verschwenkte Verbindungsabschnitt (1a) durch die Einstülpungen (31, 32) im verschwenkten Zustand nur in einer Drehrichtung begrenzt schwenkbar ist.

27. Sitzmöbelstück mit Stützen (92) und Trägern (93), **dadurch gekennzeichnet, dass** die Stützen (92) und Träger (93) als Möbelteile durch mindestens ein Kopplungssystem nach einem der Ansprüche 1 bis 23 lösbar verbunden sind.

28. Sitzmöbelstück nach Anspruch 27, **dadurch gekennzeichnet, dass**
an den Trägern (93) als zweites Möbelteil die einen Verbindungselemente (7a) mit den Halteabschnitten (26) angeformt sind
und
die Stützen (92) als erstes Möbelteil die Durchbrüche (9) der anderen Verbindungselemente (7b) aufweisen, in welche die Halteabschnitte (26) zur Bereitstellung der jeweiligen Verbindungen aufnehmbar sind.

29. Sitzmöbelstück nach Anspruch 28, **dadurch gekennzeichnet, dass**
ein Träger (93) als Sitzplatte ausgebildet ist,
das Sitzmöbelstück eine Rückenplatte (93a) als Möbelteil aufweist, an welche als zweites Möbelteil die einen Verbindungselemente (7a) mit den Halteabschnitten zum Zusammenwirken mit den Durchbrüchen (9) der anderen Verbindungselemente (7b) angeformt sind,
die Rückenplatte (93a) mindestens eine Ausnehmung (95) aufweist, welche in Höhe der Sitzplatte (93) im unbelasteten Zustand angeordnet ist, die Sitzplatte (93) sich in ihrem der Rückenplatte (93a) zugewandeten Bereich verjüngt und zu mindestens einem Zungenabschnitt (96) ausgebildet ist, welcher in die Ausnehmung (95) der Rückenplatte (93a) hineinragt oder durch die Ausnehmung (95) zumindest teilweise hindurchgeführt ist, vorzugsweise der Zungenabschnitt (96) in der Ausnehmung der Rückenplatte zentriert ausgerichtet ist.

30. Sitzmöbelstück nach Anspruch 29, **dadurch gekennzeichnet, dass** ein aus der Ausnehmung (95) herausgeführter vorderer Teil (96a) des Zungenabschnitts (96) mit einem in einen in dem vorderen Teil (96a) ausgefrästen Durchbruch eingeführten Stift werkzeuglos gesichert ist.

31. Sitzmöbelstück nach Anspruch 30, **dadurch gekennzeichnet, dass** der Stift als Stiftverbindung zusätzlich mit Sicherungselementen lösbar gesichert ist.

## Claims

1. A coupling system for re-releasably connecting furniture parts, wherein the coupling system has two plate-shaped connection members (7a, 7b), wherein
a. the connection members (7a, 7b) are configured to be displaceable relative to one another and at least one re-releasable connection can be created between the furniture parts, the other connection member (7b) has an aperture (9), with which a first furniture part can be equipped, and the one connection member (7a) is a retaining section (26) which can be brought into engagement with the aperture (9) and which can be arranged on a second furniture part,
b. the retaining section (26) of the one connection member (7a) has a base section (6), a section (5), which joins onto the base section (6), and a bar-like connection section (1a) which joins onto the section (5) and which merges, at the free end of the retaining section (26), into a undercut head section (1),
c. the head section (1) has at least one undercut region (27), which, with a section (5) edge region (2) spaced apart from the undercut region (27), forms engagement regions (4) for the other connection member (7b), at least two engagement regions (4), which are open at opposite sides, are configured at the retaining section (26)
d. the engagement regions (4) are defined by a base edge (3) towards the connection section (1a),
**characterised in that**
e. the section (5) tapers in the direction of the free end of the retaining section (26) in plan view,
f. a transition region from the base edge (3) into the edge region (2) of the section (5) is drawn in, forming a folded-in groove (8)
and
g. the turned-in groove (8) is oriented transverse to a middle-longitudinal axis M of the one connection member (7a),
h. the aperture (9) is defined on all sides in plan view, includes a guide-through region (18) for the feeding through of the retaining section (26) of the one connection member (7a) by its head section (1) along the middle-longitudinal axis A of the guide-through region (18) and includes a retaining region (19) for receiving the retaining section (26) of the one connection member (7a) in the pivoted state,
i. the guide-through region (18) is rectangular in plan view and merges in the centre into the retaining region (19) which is expanded in a hollow cylinder-shaped manner, into which there project turned-in areas (31, 32), which are arranged opposite and spaced apart from one another,
j. wherein, in the pivoted state, the retaining section (26) comes to a stop by its connection section (1a) at the turned-in areas (31, 32).

2. The coupling system according to Claim 1, **characterised in that**
the pivoting of the retaining section (26), which is fed through the guide-through region along its middle-longitudinal axis A, in the retaining region (19) from the inserted state into the pivoted state into a direction towards the turned-in areas (31, 32) around the middle-longitudinal axis A is limited by the turned-in areas (31, 32) and their fifth edge region (14) and their sixth edge region (13) and
the connection section (1a) of the retaining section (26) is pivoted in the retaining region (19) through the turned-in areas (31, 32) up to the stop, the one connection member (7a), by its retaining section (26), in the pivoted state jams in a transverse position relative to the other connection member (7b), wherein the region (27) of the head section (1) and the edge regions (2) of the section (5), as well as the base edges (3) of the connection sections (1a), rest against the three sides of the edge arcs (10, 15) of the other connection member (7b) and encompass these in order to provide a form fit / friction fit / or force fit.

3. The coupling system according to Claim 1 or 2, **characterised in that** the pivoting of the retaining section (26) in the retaining region (19) out of the inserted state into the pivoted state takes place around the middle-longitudinal axis A of the guide-through region (18).

4. The coupling system according to one of claims 1 to 3, **characterised in that**, in order to move back the one connection member (7a) with its retaining section (26) along the middle-longitudinal axis A, the retaining section (26) of the one connection member (7a), which is situated in a transverse position relative to the other connection member (7b), is pivoted back from the transverse position or from the pivoted state into the inserted state around the longitudinal axis A into the guide-through region (18).

5. The coupling system according to one of claims 1 to 4, **characterised in that** a width B3 of the section (5) and / or a width B4 of the base section (6) are larger than a width B1 of the head section 1.

6. The coupling system according to one of claims 1 to 5, **characterised in that** the width B3 of the section (5) is 1.2 to 2.0 times larger than the width B1 of the head section (1).

7. The coupling system according to one of claims 1 to 6, **characterised in that** a width B4 of the base section (6) is larger than the width B3 of the section (5).

8. The coupling system according to one of claims 1 to 7, **characterised in that** the retaining region (19) has two turned-in areas (31, 32) that are arranged symmetrical relative to its cylinder axis A, the turned-in areas (31, 32) are spaced apart from one another and are arranged projecting into a hollow cylinder-shaped inner space (41) of the retaining region (19).

9. The coupling system according to one of claims 5 to 8, **characterised in that** a diameter D3 of the retaining region (19) is smaller than a width B3 of the section (5).

10. The coupling system according to Claim 8 or 9, **characterised in that** the retaining section (26) of the one connection member (7a) is fed through the guide-through region (18) such that the fed-through retaining section (26) can be pivoted, with reference to its middle-longitudinal axis M at least by a predetermined angle, in particular by 90°, out of the guided-through state into a pivoted state, the retaining section (26) in the pivoted state cannot be returned from the retaining region (19) along the cylinder axis A of the retaining region (19).

11. The coupling system according to one of claims 1 to 10, **characterised in that** the connection section (1a) pivoted into the retaining region (19) up to the stop can be pivoted in a limited manner in the pivoted state only in one direction of rotation due to the turned-in areas (31, 32).

12. The coupling system according to one of claims 1 to 11, **characterised in that**, in the pivoted state, the connection section (1a) rests against a fifth edge region (14) and a sixth edge region (13) of the retaining region (19) and the middle-longitudinal axis M in the pivoted state corresponds with the cylinder axis A and / or middle-longitudinal axis A of the guide-through region (18) of the retaining region (19).

13. The coupling system according to one of claims 1 to 12, **characterised in that** the first turned-in area (31) has a first edge region (12) and a fifth edge region (14), the fifth edge region (14) is oriented perpendicular to the first edge region (12), there is situated opposite the first edge region (12) a second edge region (11), the second edge region (11) merges into a curved first edge arc (10), the first edge arc (10) extends around the cylinder axis A, the first edge arc (10) merges into a sixth edge region (13), the sixth edge region (13) merges into a third edge region (16) which is oriented perpendicular to it, the third runs parallel to the first edge region (12), there is situated opposite the third edge region (16) a fourth edge region (17), which merges into a second curved edge arc (15), the fourth edge region (17) is oriented parallel to the second edge region (11), which second edge arc (15) extends around the cylinder axis A, the second edge arc (15) merges into the fifth edge region (14), which is oriented parallel to the sixth edge region (13), the first (12), second (11), third (16) and fourth (17) edge regions are configured as side walls of the guide-through region (18), which guide-through region (18) is laterally defined by side regions as side walls (80) oriented perpendicular to the first edge region (12), wherein the one side wall (80) connects the first (12) with the second (11) and the other side wall (80) connects the third (16) with the fourth edge region (17).

14. The coupling system according to one of claims 1 to 13, **characterised in that** the first edge region (12), the third edge region (16), the second edge region (11) and / or the fourth edge region (17) are surface-parallel to one another.

15. The coupling system according to one of claims 1 to 14, **characterised in that** the edge arcs (10, 15) are in the shape of quarter circular arcs.

16. The coupling system according to one of claims 1 to 15, **characterised in that**, in plan view, the aperture (9) of the other connection member (7b) is laterally defined by the first to the sixth edge regions (12, 11, 16, 17, 14, 13), by the edge arcs (15, 10) and by side walls (80).

17. The coupling system according to one of claims 1 to 16, **characterised in that** the diameter D3 of the retaining region (19) is smaller than the diameter D2 of the guide-through region (18).

18. The coupling system according to one of claims 1 to 17, **characterised in that** the diameter D3 of the retaining region (19) corresponds to the width B2 of the connection section (1a).

19. The coupling system according to one of claims 1 to 18, **characterised in that** the length A4 of the second edge region (11) and / or the length A4 of the fourth edge region (17) correspond to the distance A6 of the engagement region (4).

20. The coupling system according to one of claims 1 to 19, **characterised in that** the thickness of the edge arcs (10, 15) corresponds to the distance A5 of the edge region (2) of the section (5) from the region (27) of the head section (1).

21. The coupling system according to one of claims 1 to 20, **characterised in that** the engagement regions (4) are configured in a slot shape.

22. The coupling system according to one of claims 1 to 21, **characterised in that** the one connection member is configured in one-piece.

23. The coupling system according to one of claims 1 to 22, **characterised in that** the other connection member is configured in one-piece.

24. Furniture, which includes, as furniture parts, props, supports and / or other parts, in particular backrests, wherein the props (92), the supports (93) and / or the other parts of the furniture are releasably connected to one another by means of the coupling system according to at least one of the preceding claims.

25. The furniture according to Claim 24, **characterised in that** the furniture parts are configured in a plate-shape.

26. The furniture according to Claim 24 or 25, **characterised in that** the props (92) and / or supports (93) are configured with the connection members (7a, 7b),
the connection members (7a, 7b) are configured displaceably relative to one another and at least one re-releasable connection can be created between the furniture parts, the other connection member (7b) has an aperture (9) in a first furniture part and the one connection member (7a) is a retaining section (26) which can be brought into engagement with the aperture (9) and which is arranged on a second furniture part,
the retaining section (26) of the one connection member (7a) has a base section (6), a section (5), which joins onto the base section (6), and a bar-like connection section (1a) which joins onto the section (5) and which merges, at the free end of the retaining section (26), into an undercut head section (1),
the head section (1) has at least one undercut region (27), which, with a section (5) edge region (2) which is spaced apart from the region (27), forms an engagement region (4) for the other connection member (7b), at least two engagement regions (4), which open at opposite sides, are configured at the retaining section (26)
the engagement regions (4) are defined by a base edge (3) towards the connection section (1a),
the section (5) tapers in the direction of the free end of the retaining sections (26) in plan view,
a transition region from the base edge (3) into the edge region (2) of the section (5) is drawn in, forming a turned-in groove (8)
and
the turned-in groove (8) is oriented transverse to a middle-longitudinal axis M of the one connection member (7a),
the laterally defined aperture (9) of the other connection member (7b) has a guide-through region (18) which is configured rectangularly in plan view and which merges centrally into a retaining region (19) expanded in a hollow cylinder-shaped manner, the retaining region (19) has two turned-in areas (31, 32) arranged symmetric to its cylinder axis A, the turned-in areas (31, 32) are spaced apart from one another and are arranged projecting into a hollow cylinder-shaped inner space (41) of the retaining region (19),
the retaining section (26) of the one connection member (7a) is fed through the guide-through region (18) such that the fed-through retaining section (26) can, in respect of its middle-longitudinal axis M, be pivoted at least by a predetermined angle, in particular by 90°, out of the guided-through state into a pivoted state, the retaining section (26), in the pivoted state, comes to a stop at the turned-in areas (31, 32) by its connection section (1a) and cannot be returned out of the retaining region (19) along the cylinder axis A of the retaining region (19)
and
the connection section (1a) pivoted into the retaining region (19) up to the stop can be pivoted in the pivoted state only in one direction of rotation limited by the turned-in areas (31, 32).

27. A piece of seating furniture with props (92) and supports (93), **characterised in that** the props (92) and supports (93) are releasably connected as furniture parts by means of at least one coupling system according to one of claims 1 to 23.

28. The piece of seating furniture according to Claim 27, **characterised in that**
the one connection members (7a) are formed-on with the retaining sections (26) at the supports (93) as a second furniture part
and
the props (92), as a first furniture part, have the apertures (9) of the other connection members (7b), in which the retaining sections (26) are able to be received in order to provide the respective connections.

29. The piece of seating furniture according to Claim 28, **characterised in that**
a support (93) is configured as a seat plate,
the piece of seating furniture has a back panel (93a) as a furniture part, at which as a second furniture part, the one connection members (7a) are formed-on with the retaining sections in order to interact with the apertures (9) of the other connection members (7b),
the back panel (93a) has at least one recess (95), which is arranged at the height of the seat plate (93) in the unstressed state, the seat plate (93) tapers in its region facing the back panel (93a) and is configured into at least one tongue section (96), which projects into the recess (95) of the back panel (93a) or is fed at least partly through the recess (95), the tongue section (96) is preferably oriented centrally in the recess of the back panel.

30. The piece of seating furniture according to Claim 29, **characterised in that** a front part (96a) of the tongue section (96) guided out of the recess (95) is toollessly secured with a pin inserted into an aperture countersunk in the front part (96a).

31. The piece of seating furniture according to Claim 30, **characterised in that** the pin, as a pin connection, is additionally releasably secured, by securing members.

## Revendications

1. Système de couplage pour assembler des éléments de meuble de manière à pouvoir les désolidariser à nouveau, ledit système de couplage comportant deux éléments d'assemblage (7a, 7b) en forme de plaque,
a. les éléments d'assemblage (7a, 7b) étant réalisés de manière déplaçable l'un par rapport à l'autre, et au moins un assemblage pouvant à nouveau être désolidarisé est réalisable entre les éléments de meuble, l'autre des éléments d'assemblage (7b), comportant un trou débouchant (9), qui peut équiper un premier élément du meuble et l'un des éléments d'assemblage (7a) est une partie de fixation (26), propre à être agencée sur un deuxième élément de meuble et apte être amenée en prise avec le trou débouchant (9),
b. la partie de fixation (26) de l'un des éléments d'assemblage (7a) possède une partie de base (6), une partie (5) adjacente à la partie de base (6), et une partie de liaison (1a) en forme de traverse, qui est adjacente à la partie (5) et qui se prolonge au niveau de l'extrémité libre de la partie de fixation (26) par une partie de tête (1) dégagée,
c. la partie de tête (1) comporte au moins une zone dégagée (27) qui forme, avec une zone de bordure (2), de la partie (5) située à distance de la zone dégagée (27), des zones de prise (4) pour l'autre des éléments d'assemblage (7b), au moins deux zones de prise (4), ouvertes en sens opposé, étant réalisées sur la partie de fixation (26),
d. les zones de prise (4) sont délimitées vers la partie de liaison (1a) par un bord de base (3),
**caractérisé en ce que**
e. la partie (5), en vue de dessus, se rétrécit vers l'extrémité libre de la partie de fixation (26),
f. une zone de transition, entre le bord de base (3) et la zone de bordure (2) de la partie (5), est restreinte en formant une rainure pénétrante (8),
et
g. la rainure pénétrante (8) est orientée transversalement à un axe médian longitudinal M de l'un des éléments d'assemblage (7a),
h. le trou débouchant (9) est délimité sur tous les côtés dans la vue de dessus, comporte une zone de passage (18), pour faire passer la partie de fixation (26) de l'un des éléments d'assemblage (7a) avec sa partie de tête (1) le long de l'axe médian longitudinal A de la zone de passage (18), et une zone de retenue (19) pour recevoir la partie de fixation (26) de l'un des éléments d'assemblage (7a) dans la position pivotée,
i. la zone de passage (18) est rectangulaire en vue de dessus et se prolonge de manière centrée par la zone de retenue (19) élargie en forme de cylindre creux, dans laquelle s'engagent des enfoncements (31, 32) qui sont disposés face à face et à distance l'un de l'autre,
j. la partie de fixation (26), dans la position pivotée, vient buter avec sa partie de liaison (1a) contre les enfoncements (31, 32).

2. Système de couplage selon la revendication 1, **caractérisé en ce que**
le pivotement de la partie de fixation (26), passée à travers la zone de passage le long de l'axe médian longitudinal A de celle-ci, dans la zone de retenue (19) depuis la position introduite vers la position pivotée dans une direction vers les enfoncements (31, 32) autour de l'axe médian longitudinal A, est limité par les enfoncements (31, 32) et leur cinquième zone de bordure (14) et leur sixième zone de bordure (13), et
la partie de liaison (1a) de la partie de fixation (26) est pivotée dans la zone de retenue (19) à travers les enfoncements (31, 32) jusqu'à la butée, l'un des éléments d'assemblage (7a) avec sa partie de fixation (26) dans la position pivotée est bloquée en position transversale par rapport à l'autre des éléments d'assemblage (7b), la zone (27) de la partie de tête (1) et les zones de bordure (2) de la partie (5), ainsi que les bords de base (3) de la partie de liaison (1a) sont en appui contre les trois côtés des arcs de bordure (10, 15) de l'autre des éléments d'assemblage (7b) et entourent ceux-ci pour réaliser un assemblage par complémentarité de forme, un assemblage par frottement et/ou un assemblage par adhérence.

3. Système de couplage selon la revendication 1 ou 2, **caractérisé en ce que** le pivotement de la partie de fixation (26) dans la zone de retenue (19), à partir de la position introduite vers la position pivotée, s'effectue autour de l'axe médian longitudinal A de la zone de passage (18).

4. Système de couplage selon l'une quelconque des revendications 1 à 3, **caractérisé en ce que** pour le mouvement de retour de l'un des éléments d'assemblage (7a) avec sa partie de fixation (26) le long de l'axe médian longitudinal A, la partie de fixation (26) de l'un des éléments d'assemblage (7a), située en position transversale par rapport à l'autre des éléments d'assemblage (7b), pivote en retour dans la zone de passage (18) autour de l'axe médian longitudinal A, hors de la position transversale ou hors de la position pivotée vers la position introduite.

5. Système de couplage selon l'une quelconque des revendications 1 à 4, **caractérisé en ce qu'**une largeur B3 de la partie (5) et/ou une largeur B4 de la partie de base (6) sont supérieures à une largeur B1 de la partie de tête (1).

6. Système de couplage selon l'une quelconque des revendications 1 à 5, **caractérisé en ce que** la largeur B3 de la partie (5) est 1,2 fois à 2,0 fois plus grande que la largeur B1 de la partie de tête (1).

7. Système de couplage selon l'une quelconque des revendications 1 à 6, **caractérisé en ce qu'**une largeur B4 de la partie de base (6) est supérieure à la largeur B3 de la partie (5).

8. Système de couplage selon l'une quelconque des revendications 1 à 7, **caractérisé en ce que** la zone de retenue (19) comporte deux enfoncements (31, 32) disposés symétriquement à son axe de cylindre A, lesdits enfoncements (31, 32) sont situés à distance l'un de l'autre et sont agencés de manière à faire saillie dans un espace intérieur (41) en forme de cylindre creux de la zone de retenue (19).

9. Système de couplage selon l'une quelconque des revendications 5 à 8, **caractérisé en ce qu'**un diamètre D3 de la zone de retenue (19) est inférieur à la largeur B3 de la partie (5).

10. Système de couplage selon la revendication 8 ou 9, **caractérisé en ce que** la partie de fixation (26) de l'un des éléments d'assemblage (7a) est guidée à travers la zone de passage (18) de telle sorte que la partie de fixation (26), ayant traversé ladite zone, est apte à pivoter, hors de sa position introduite dans une position pivotée, par rapport à son axe médian longitudinal M au moins selon un angle prédéfini, en particulier de 90°, la partie de fixation (26), dans la position pivotée, ne pouvant pas être ramenée hors de la zone de retenue (19) le long de l'axe du cylindre A de la zone de retenue (19).

11. Système de couplage selon l'une quelconque des revendications 1 à 10, **caractérisé en ce que** la partie de liaison (1a), pivotée dans la zone de retenue (19) jusqu'à la butée, est apte, dans la position pivotée, à pivoter de manière limitée par les enfoncements (31, 32) seulement dans un sens de rotation.

12. Système de couplage selon l'une quelconque des revendications 1 à 11, **caractérisé en ce que** dans la position pivotée, la partie de liaison (1a) est en appui contre une cinquième zone de bordure (14) et une sixième zone de bordure (13) de la zone de retenue (19), et l'axe médian longitudinal M coïncide, dans la position pivotée, avec l'axe du cylindre A et/ou l'axe médian longitudinal A de la zone de passage (18) de la zone de retenue (19).

13. Système de couplage selon l'une quelconque des revendications 1 à 12, **caractérisé en ce que** le premier enfoncement (31) comporte une première zone de bordure (12) et une cinquième zone de bordure (14), la cinquième zone de bordure (14) est orientée perpendiculairement à la première zone de bordure (12), une deuxième zone de bordure (11) est située en face de la première zone de bordure (12), la deuxième zone de bordure (11) se prolonge par un premier arc de bordure (10) courbe, le premier arc de bordure (10) s'étend autour de l'axe du cylindre A, le premier arc de bordure (10) se prolonge par une sixième zone de bordure (13), la sixième zone de bordure (13) se prolonge par une troisième zone de bordure (16) orientée perpendiculairement à celle-ci, la troisième zone de bordure s'étend parallèlement à la première zone de bordure (12), en face de la troisième zone de bordure (16) est disposée une quatrième zone de bordure (17), qui se prolonge par un deuxième arc de bordure (15) courbe, la quatrième zone de bordure (17) est orientée parallèlement à la deuxième zone de bordure (11), lequel deuxième arc de bordure (15) s'étend autour de l'axe du cylindre A, le deuxième arc de bordure (15) se prolonge par la cinquième zone de bordure (14) qui est orientée parallèlement à la sixième zone de bordure (13), les première (12), deuxième (11), troisième (16) et quatrième (17) zones de bordure sont réalisées sous forme de parois latérales de la zone de passage (18), laquelle zone de passage (18) est délimitée latéralement par des zones latérales formant des parois latérales (80), orientées perpendiculairement à la première zone de bordure (12), sachant que l'une des parois latérales (80) relie la première zone de bordure (12) à la deuxième zone de bordure (11) et l'autre paroi latérale (80) relie la troisième zone de bordure (16) à la quatrième zone de bordure (17).

14. Système de couplage selon l'une quelconque des revendications 1 à 13, **caractérisé en ce que** la première zone de bordure (12), la troisième zone de bordure (16), la deuxième zone de bordure (11) et/ou la quatrième zone de bordure (17) sont disposées de manière planes et parallèles entre elles.

15. Système de couplage selon l'une quelconque des revendications 1 à 14, **caractérisé en ce que** les arcs de bordure (10, 15) sont réalisés en forme de quart de cercle.

16. Système de couplage selon l'une quelconque des revendications 1 à 15, **caractérisé en ce que** en vue de dessus, le trou débouchant (9) de l'autre des éléments d'assemblage (7b) est délimité latéralement par la première jusqu'à la sixième zone de bordure (12, 11, 16, 17, 14, 13), par les arcs de bordure (10, 15) et par les parois latérales (80).

17. Système de couplage selon l'une quelconque des revendications 1 à 16, **caractérisé en ce que** le diamètre D3 de la zone de retenue (19) est inférieur au diamètre D2 de la zone de passage (18).

18. Système de couplage selon l'une quelconque des revendications 1 à 17, **caractérisé en ce que** le diamètre D3 de la zone de retenue (19) correspond à la largeur B2 de la partie de liaison (1a).

19. Système de couplage selon l'une quelconque des revendications 1 à 18, **caractérisé en ce que** la longueur A4 de la deuxième zone de bordure (11) et/ou la longueur A4 de la quatrième zone de bordure (17) correspondent à la distance A6 de la zone de prise (4).

20. Système de couplage selon l'une quelconque des revendications 1 à 19, **caractérisé en ce que** l'épaisseur des arcs de bordure (10, 15) correspond à la distance A5 entre la zone de bordure (2) de la partie (5) et la zone (27) de la partie de tête (1).

21. Système de couplage selon l'une quelconque des revendications 1 à 20, **caractérisé en ce que** les zones de prise (4) sont réalisées en forme de fente.

22. Système de couplage selon l'une quelconque des revendications 1 à 21, **caractérisé en ce que** l'un des éléments d'assemblage est réalisé d'un seul tenant.

23. Système de couplage selon l'une quelconque des revendications 1 à 22, **caractérisé en ce que** l'autre des éléments d'assemblage est réalisé d'un seul tenant.

24. Meubles, qui comportent, comme éléments de meuble, des appuis, supports et/ou autres éléments, en particulier des dossiers, les appuis (92), les supports (93) et/ou les autres éléments de meubles étant assemblés entre eux de manière à pouvoir les désolidariser par le système de couplage selon l'une quelconque des revendications précédentes.

25. Meubles selon la revendication 24, **caractérisés en ce que** les éléments des meubles sont réalisés sous la forme de plaques.

26. Meubles selon la revendication 24 ou 25, **caractérisés en ce que** les appuis (92) et/ou les supports (93) sont réalisés avec les éléments d'assemblage (7a, 7b),
les éléments d'assemblage (7a, 7b) sont réalisés de manière déplaçable l'un par rapport à l'autre, et au moins un assemblage pouvant à nouveau être désolidarisé peut être réalisé entre les éléments de meuble, l'autre des éléments d'assemblage (7b) comporte un trou débouchant (9) dans un premier élément de meuble et l'un des éléments d'assemblage (7a) est une partie de fixation (26), agencée sur un deuxième élément de meuble et apte à être amenée en prise avec le trou débouchant (9),
la partie de fixation (26) de l'un des éléments d'assemblage (7a) possède une partie de base (6), une partie (5) adjacente à la partie de base (6), et une partie de liaison (1a) en forme de traverse, qui est adjacente à la partie (5) et qui se prolonge au niveau de l'extrémité libre de la partie de fixation (26) par une partie de tête (1) dégagée,
la partie de tête (1) comporte au moins une zone dégagée (27) qui, avec une zone de bordure (2), située à distance de la zone dégagée (27), de la partie (5), forme une zone de prise (4) pour l'autre des éléments d'assemblage (7b), au moins deux zones de prise (4), ouvertes en sens opposé, sont réalisées sur la partie de fixation (26),
les zones de prise (4) sont délimitées vers la partie de liaison (1a) par un bord de base (3),
la partie (5), en vue de dessus, se rétrécit vers l'extrémité libre de la partie de fixation (26),
une zone de transition, entre le bord de base (3) et la zone de bordure (2) de la partie (5), est restreinte en formant une rainure pénétrante (8),
et
la rainure pénétrante (8) est orientée transversalement à un axe médian longitudinal M de l'un des éléments d'assemblage (7a),
le trou débouchant (9), délimité latéralement, de l'autre des éléments d'assemblage (7b) comporte une zone de passage (18) de forme rectangulaire en vue de dessus, qui se prolonge de manière centrée par une zone de retenue (19) élargie en forme de cylindre creux, la zone de retenue (19) comporte deux enfoncements (31, 32), disposés symétriquement par rapport à son axe de cylindre A, les enfoncements (31, 32) sont situés à distance l'un de l'autre et sont disposés en faisant saillie dans un espace intérieur (41) cylindrique creux de la zone de retenue (19),
la partie de fixation (26) de l'un des éléments d'assemblage (7a) est passé à travers la zone de passage (18), de telle sorte que la partie de fixation (26), ayant passé à travers ladite zone, est apte à pivoter, hors de sa position introduite dans une position pivotée, par rapport à son axe médian longitudinal M au moins selon un angle prédéfini, en particulier de 90°, la partie de fixation (26), dans la position pivotée, vient buter avec sa partie de liaison (1a) contre les enfoncements (31, 32) et ne peut pas être ramenée hors de la zone de retenue (19) le long de l'axe du cylindre A de la zone de retenue (19),
et
la partie de liaison (1a), pivotée dans la zone de retenue (19) jusqu'à la butée, est apte, dans la position pivotée, à pivoter de manière limitée par les enfoncements (31, 32) seulement dans un sens de rotation.

27. Siège avec des appuis (92) et des supports (93), **caractérisé en ce que** les appuis (92) et les supports (93) formant des éléments du meuble sont assemblés de manière à pouvoir les désolidariser par l'intermédiaire d'au moins un système de couplage selon l'une quelconque des revendications 1 à 23.

28. Siège selon la revendication 27, **caractérisé en ce que** les unes des éléments d'assemblage (7a) avec les parties de fixation (26) sont formés sur les supports (93) formant le deuxième élément du meuble,
et
les appuis (92) formant le premier élément du meuble comportent les trous débouchants (9) des autres des éléments d'assemblage (7b), lesquels sont propres à recevoir les parties de fixation (26) pour réaliser les assemblages respectifs.

29. Siège selon la revendication 28, **caractérisé en ce que**
un support (93) est réalisé sous la forme d'un plateau d'assise,
le siège comporte un plateau de dossier (93a) formant un élément du meuble, sur lequel sont formés les uns des éléments d'assemblage (7a) formant le deuxième élément du meuble, avec les parties de fixation pour coopérer avec les trous débouchants (9) des autres des éléments d'assemblage (7b),
le plateau de dossier (93a) comporte au moins un évidement (95) qui est situé à hauteur du plateau d'assise (93) dans la position non sollicitée, le plateau d'assise (93) se rétrécit dans sa zone orientée vers le plateau de dossier (93a) et forme au moins une languette (96) qui fait saillie dans l'évidement (95) du plateau de dossier (93a) ou est guidé au moins partiellement à travers l'évidement (95), de préférence la languette (96) est agencée de manière centrée dans l'évidement du plateau de dossier.

30. Siège selon la revendication 29, **caractérisé en ce qu'**une partie avant (96a) de la patte (96), guidée hors de l'évidement (95) est immobilisée sans outil avec une goupille introduite dans un trou débouchant fraisé dans la partie avant (96a).

31. Siège selon la revendication 30, **caractérisé en ce que** la goupille formant un assemblage par goupille est, en plus, immobilisé de manière à pouvoir le désolidariser par des éléments d'immobilisation.
